(19) Europäisches Patentamt
European Patent Office
Office européen des brevets

(11) EP 4 450 552 A1

(12) **EUROPEAN PATENT APPLICATION**
published in accordance with Art. 153(4) EPC

(43) Date of publication:
**23.10.2024 Bulletin 2024/43**

(21) Application number: **22906901.8**

(22) Date of filing: **04.07.2022**

(51) International Patent Classification (IPC):
***C08L 9/00*** *(2006.01)* ***B60C 1/00*** *(2006.01)*
***C08K 3/013*** *(2018.01)* ***C08L 101/00*** *(2006.01)*

(52) Cooperative Patent Classification (CPC):
**B60C 1/00; C08K 3/013; C08L 9/00; C08L 101/00;**
Y02T 10/86

(86) International application number:
**PCT/JP2022/026638**

(87) International publication number:
**WO 2023/112364 (22.06.2023 Gazette 2023/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.12.2021 JP 2021202841**

(71) Applicant: **Bridgestone Corporation**
**Tokyo 104-8340 (JP)**

(72) Inventor: **KAWASHIMA Masahiro**
**Tokyo 104-8340 (JP)**

(74) Representative: **Marks & Clerk LLP**
**15 Fetter Lane**
**London EC4A 1BW (GB)**

# (54) TIRE RUBBER COMPOSITION, TREAD RUBBER, AND TIRE

(57) Provided is a rubber composition for a tire with which it is possible to obtain a tire having excellent wet gripping on both dense graded asphalt paving and porous asphalt paving and having high road surface robustness. The tire rubber composition contains a rubber component including an isoprene-based rubber (A) having a glass-transition temperature of -50°C or lower, a reinforcing filler (B), and a resin component (C). The proportion constituted by the isoprene-based rubber (A) in 100 parts by mass of rubber component is not less than 15 and less than 50 parts by mass. The resin component (C) is at least partially hydrogenated and has an SP value difference with the isoprene-based rubber (A) of 1.40 $(cal/cm^3)^{1/2}$ or less. A composition parameter P1 calculated by a specific formula (I-1) is 1,000 or more, and a composition parameter P2 calculated by a specific formula (I-2) is 0.25 or more.

EP 4 450 552 A1

## Description

TECHNICAL FIELD

The present disclosure relates to a rubber composition for a tire, tread rubber, and a tire.

BACKGROUND

Various studies have been conducted with the aim of improving braking performance on wet road surfaces (hereinafter, referred to simply as "wet gripping performance") from a viewpoint of improving vehicle safety.

For example, Patent Literature (PTL) 1, shown below, discloses the improvement of braking performance of a tire on both dry road surfaces and wet road surfaces by adopting, in tread rubber of the tire, a rubber composition that has a thermoplastic resin and a filler including silica compounded with a rubber component comprising 70 mass% or more of natural rubber.

CITATION LIST

Patent Literature

PTL 1: WO2015/079703A1

SUMMARY

(Technical Problem)

With regards to wet gripping performance, there is demand for wet gripping not only on ordinary dense graded asphalt paving in typical districts, but also on porous asphalt paving such as is seen in snowy and cold districts.

However, studies conducted by the inventor have revealed that there is room for further improvement of the rubber composition described in PTL 1 in terms of achieving a balance of high levels of wet gripping on dense graded asphalt paving and porous asphalt paving.

Accordingly, one object of the present disclosure is to solve the problem in the conventional technique described above and to provide a rubber composition for a tire, and also tread rubber formed from this rubber composition, with which it is possible to obtain a tire that has both excellent wet gripping on dense graded asphalt paving and excellent wet gripping on porous asphalt paving, and that also has high road surface robustness.

Another object of the present disclosure is to provide a tire that has both excellent wet gripping on dense graded asphalt paving and excellent wet gripping on porous asphalt paving, and that also has high road surface robustness.

(Solution to Problem)

Primary features of the present disclosure for solving the problem set forth above are as follows.

[1] A rubber composition for a tire comprising: a rubber component including an isoprene-based rubber (A) having a glass-transition temperature of -50°C or lower; a reinforcing filler (B); and a resin component (C), wherein

a proportion constituted by the isoprene-based rubber (A) in 100 parts by mass of the rubber component is not less than 15 parts by mass and less than 50 parts by mass,
the resin component (C) is at least partially hydrogenated and has an SP value difference with the isoprene-based rubber (A) of 1.40 $(cal/cm^3)^{1/2}$ or less, and
when a diene-based rubber component is taken to be 100 parts by mass, a composition parameter P1 calculated by formula (I-1), shown below:

composition parameter P1 = (number of parts by mass of isoprenebased rubber (A)) × (number of parts by mass resin components (C))

is 1,000 or more, and a composition parameter P2 calculated by formula (I-2), shown below:

composition parameter P2 = {(number of parts by mass of resin components (C))/(number of parts by mass of isoprene-based rubber (A))} × (mass fraction of reinforcing filler (B) in rubber composition)

is 0.25 or more.

[2] The rubber composition for a tire according to the foregoing [1], wherein the SP value difference between the resin component (C) and the isoprene-based rubber (A) is 0.50 $(cal/cm^3)^{1/2}$ or less.
[3] The rubber composition for a tire according to the foregoing [1] or [2], wherein the reinforcing filler (B) includes silica.
[4] The rubber composition for a tire according to any one of the foregoing [1] to [3], wherein the resin component (C) has a softening point of higher than 110°C and a polystyrene-equivalent weight-average molecular weight of 200 g/mol to 1,600 g/mol.
[5] The rubber composition for a tire according to any one of the foregoing [1] to [4], wherein content of the resin component (C) is 35 parts by mass or more relative to 100 parts by mass of the rubber component.
[6] Tread rubber formed from the rubber composition for a tire according to any one of the foregoing [1] to [5].
[7] A tire comprising the tread rubber according to the foregoing [6].

(Advantageous Effect)

According to the present disclosure, it is possible to provide a rubber composition for a tire, and also tread rubber formed from this rubber composition, with which it is possible to obtain a tire that has both excellent wet gripping on dense graded asphalt paving and excellent wet gripping on porous asphalt paving, and that also has high road surface robustness.
Moreover, according to the present disclosure, it is possible to provide a tire that has both excellent wet gripping on dense graded asphalt paving and excellent wet gripping on porous asphalt paving, and that also has high road surface robustness.

DETAILED DESCRIPTION

The following provides a detailed illustrative description of a rubber composition for a tire, tread rubber, and a tire according to the present disclosure based on embodiments thereof.
Compounds described in the present specification may be partially or fully derived from fossil resources, biological resources such as plant resources, or recycled resources such as used tires. Moreover, these compounds may be derived from a mixture of two or more from among fossil resources, biological resources, and recycled resources.

<Rubber composition for tire>

The rubber composition for a tire according to the present disclosure contains a rubber component, a reinforcing filler (B), and a resin component (C). Features of the rubber composition for a tire according to the present disclosure are that the rubber component includes an isoprene-based rubber (A) having a glass-transition temperature of -50°C or lower, the proportion constituted by the isoprene-based rubber (A) in 100 parts by mass of the rubber component is not less than 15 parts by mass and less than 50 parts by mass, the resin component (C) is at least partially hydrogenated and has an SP value difference with the isoprene-based rubber of 1.40 $(cal/cm^3)$ or less, and when a diene-based rubber component is taken to be 100 parts by mass, a composition parameter P1 calculated by formula (I-1), shown below:

composition parameter P1 = (number of parts by mass of isoprene- based rubber (A)) × (number of parts by mass of resin component (C)) (I-1)

is 1,000 or more, and a composition parameter P2 calculated by formula (I-2), shown below:

composition parameter P2 = {(number of parts by mass of resin component (C))/(number of parts by mass of isoprene-based rubber (A))} × (mass fraction of reinforcing filler (B) in rubber composition) (I-2)

is 0.25 or more.
Note that the glass-transition temperature of a rubber component such as the isoprene-based rubber (A) referred to in the present specification is determined in accordance with ISO 22768:2006 by heating the rubber component in a specific temperature range while recording a DSC curve, and taking a peak top (inflection point) of a DSC derivative curve to be the glass-transition temperature.
Also note that the SP value (solubility parameter) of a rubber component such as the isoprene-based rubber (A) and the SP value of the resin component (C) referred to in the present specification are calculated in accordance

with the Fedors method.

Through the resin component (C) that is at least partially hydrogenated and has an SP value difference with the isoprene-based rubber (A) of 1.40 $(cal/cm^3)^{1/2}$ or less being used in combination with the isoprene-based rubber (A) in the rubber composition for a tire according to the present disclosure, it is possible to improve the fundamental wet gripping performance of a tire. In this situation, a ratio of the number of parts by mass of the resin component (C) and the number of parts by mass of the isoprene-based rubber (A) was confirmed to contribute to road surface trackability with respect to all types of road surfaces, inclusive of dense graded asphalt paving and porous asphalt paving. Moreover, the product of the number of parts by mass of the resin component (C) and the number of parts by mass of the isoprene-based rubber (A) was also confirmed to contribute to wet gripping performance. On the other hand, the reinforcing filler (B) contributes to inhibition of block deformation and also contributes to braking force. Therefore, the inventor conducted extensive and diligent studies focusing on the correlation between the composition of these components and road surface robustness. As a result, the inventor established the "composition parameter P1" and "composition parameter P2" described above and found that by appropriately adjusting the composition of a rubber component, a reinforcing filler (B), a resin component (C), and other components forming a rubber composition such that the composition parameter P1 is 1,000 or more and the composition parameter P2 is 0.25 or more, it is possible to achieve wet gripping on ordinary dense graded asphalt paving in typical districts that is at least equivalent to that conventionally achieved while also increasing wet gripping on porous asphalt paving. Accordingly, by adopting the rubber composition for a tire according to the present disclosure in a tire, it is possible to achieve a balance of high levels of both wet gripping of the tire on dense graded asphalt paving and wet gripping of the tire on porous asphalt paving and to increase road surface robustness of the tire.

Note that with regards to the reinforcing filler (B) in the formula for the composition parameter P2, the value of the mass fraction thereof in the rubber composition is used rather than the number of parts by mass thereof relative to 100 parts by mass of the rubber component. In other words, it should be noted that this value is a value that is influenced by the content of various components such as a vulcanizing agent and a vulcanization accelerator, for example, that can be compounded in addition to the rubber component and the resin component (C).

From a viewpoint of further improving wet gripping performance, the composition parameter P1 of the rubber composition for a tire according to the present disclosure calculated by formula (I-1) is preferably 1,200 or more, more preferably 1,350 or more, and even more preferably 1,500 or more. On the other hand, the composition parameter P1 calculated by formula (I-1) can be set as 2,200 or less from a viewpoint of maintaining sufficiently good performance in terms of other aspects such as wear resistance and high fuel efficiency.

From a viewpoint of even further improving road surface robustness, the composition parameter P2 of the rubber composition for a tire according to the present disclosure calculated by formula (I-2) is preferably 0.35 or more, more preferably 0.40 or more, and even more preferably 0.45 or more. On the other hand, the composition parameter P2 calculated by formula (I-2) can be set as 0.80 or less from a viewpoint of maintaining sufficiently good performance in terms of other aspects such as wear resistance and high fuel efficiency.

(Rubber component)

The rubber composition for a tire according to the present disclosure contains a rubber component. An isoprene-based rubber (A) having a glass-transition temperature of -50°C or lower and a rubber component other than the isoprene-based rubber (A) (hereinafter, also referred to simply as the "other rubber component") are used in combination as the rubber component.

-Isoprene-based rubber (A)-

The isoprene-based rubber (A) is a rubber having isoprene units as a main skeleton and may, more specifically, be natural rubber (NR), synthetic isoprene rubber (IR), or the like. The inclusion of the isoprene-based rubber (A) among the rubber component can increase fracture strength of the rubber composition. Moreover, the isoprene-based rubber (A) has a glass-transition temperature of -50°C or lower. One type of isoprene-based rubber (A) may be used individually, or two or more types of isoprene-based rubbers (A) may be used in combination.

The proportion constituted by the isoprene-based rubber (A) in 100 parts by mass of the rubber component is not less than 15 parts by mass and less than 50 parts by mass. In a situation in which this proportion is less than 15 parts by mass or is 50 parts by mass or more, wet gripping on dense graded asphalt road surfaces and/or wet gripping on porous asphalt paving becomes inadequate, and road surface robustness deteriorates. Moreover, from a viewpoint of even further improving road surface robustness, the proportion constituted by the isoprene-based rubber (A) in 100 parts by mass of the rubber component is preferably 25 parts by mass or more, and is preferably 45 parts by mass or less, and more preferably 40 parts by mass or less.

-Other rubber component-

Examples of the other rubber component besides the isoprene-based rubber (A) include an isoprene-based rubber having a glass-transition temperature of higher than -50°C, styrene-butadiene rubber (SBR), butadiene rubber (BR), chloroprene rubber (CR), butyl rubber (IIR), halogenated butyl rubber, ethylene-propylene rubber (EPR, EPDM), fluororubber, silicone rubber, and urethane rubber. Of these examples, a diene-based rubber such as styrene-butadiene rubber, butadiene rubber, or chloroprene rubber is preferable as the other rubber component, and styrene-butadiene rubber is more preferable as the other rubber component. One of these other rubber components besides the isoprene-based rubber (A) may be used individually, or two or more of these other rubber components may be used in combination. Moreover, the other rubber component besides the isoprene-based rubber (A) may be unmodified or may be modified.

The glass-transition temperature of the other rubber component is preferably lower than -30°C, more preferably lower than -40°C, more preferably -45°C or lower, and even more preferably -50°C or lower, and is preferably higher than -90°C. When the glass-transition temperature of the other rubber component is lower than -30°C, high fuel efficiency and wear resistance performance of a tire in which the rubber composition is adopted can be improved. Moreover, a rubber component having a glass-transition temperature of higher than -90°C is easy to synthesize.

The difference between SP values of the isoprene-based rubber (A) and the other rubber component is preferably 0.3 $(cal/cm^3)^{1/2}$ or more, and more preferably 0.35 $(cal/cm^3)^{1/2}$ or more. In a situation in which the difference between the SP values of the isoprene-based rubber (A) and the other rubber component is 0.3 $(cal/cm^3)^{1/2}$ or more, the isoprene-based rubber (A) and the other rubber component tend to be immiscible.

In a case in which styrene-butadiene rubber is used as the other rubber component, the styrene-butadiene rubber preferably has a bound styrene content of less than 15 mass%. The bound styrene content of the styrene-butadiene rubber signifies the proportion in which styrene units are included in the styrene-butadiene rubber. In a situation in which the bound styrene content of the styrene-butadiene rubber is less than 15 mass%, the glass-transition temperature of the styrene-butadiene rubber tends to be lowered. The bound styrene content of the styrene-butadiene rubber is more preferably 14 mass% or less, more preferably 13 mass% or less, and even more preferably 12 mass% or less. Moreover, from a viewpoint of wear resistance performance of a tire in which the rubber composition is adopted, the bound styrene content of the styrene-butadiene rubber is preferably 5 mass% or more, more preferably 7 mass% or more, and even more preferably 8 mass% or more.

The bound styrene content of the styrene-butadiene rubber can be adjusted through the amounts of monomers used in polymerization of the styrene-butadiene rubber, the degree of polymerization, and so forth.

In a case in which styrene-butadiene rubber is used as the other rubber component, the styrene-butadiene rubber is preferably modified with a modifying agent that includes a nitrogen atom-containing functional group and an alkoxy group. In a case in which the styrene-butadiene rubber is modified with a modifying agent that includes a nitrogen atom-containing functional group and an alkoxy group, this improves the balance of wet gripping performance, high fuel efficiency, and wear resistance performance of a tire in which the rubber composition is adopted, and, in particular, can further improve high fuel efficiency and wear resistance performance.

The term "modifying agent that includes a nitrogen atom-containing functional group and an alkoxy group" is used as a general term for modifying agents that include at least one nitrogen atom-containing functional group and at least one alkoxy group.

The nitrogen atom-containing functional group is preferably selected from the following:
linear, branched, alicyclic ring-containing, and aromatic ring-containing monovalent hydrocarbon groups having a carbon number of 1 to 30 that include a functional group selected from the group consisting of a primary amino group, a primary amino group protected by a hydrolyzable protecting group, an onium salt residual group of a primary amine, an isocyanate group, a thioisocyanate group, an imine group, an imine residual group, an amide group, a secondary amino group protected by a hydrolyzable protecting group, a cyclic secondary amino group, an onium salt residual group of a cyclic secondary amine, a non-cyclic secondary amino group, an onium salt residual group of a non-cyclic secondary amine, an isocyanuric acid triester residual group, a cyclic tertiary amino group, a non-cyclic tertiary amino group, a nitrile group, a pyridine residual group, an onium salt residual group of a cyclic tertiary amine, and an onium salt residual group of a non-cyclic tertiary amine and that may include a linear, branched, alicyclic ring-containing, or aromatic ring-containing monovalent hydrocarbon group having a carbon number of 1 to 30 or one or more heteroatoms selected from the group consisting of an oxygen atom, a sulfur atom, and a phosphorus atom.

--Modified styrene-butadiene rubber of first preferred embodiment--

The styrene-butadiene rubber (SBR) is preferably modified with an aminoalkoxysilane compound, and is more preferably modified with an aminoalkoxysilane compound at a terminal thereof from a viewpoint of having high affinity with the reinforcing filler (B). In a case in which a terminal of the styrene-butadiene rubber is modified with an aminoalkoxysilane compound, this results in particularly large interaction between the modified styrene-butadiene rubber and the

reinforcing filler (B) (particularly silica).

The modification site of the styrene-butadiene rubber may be a molecular terminal as described above or may be a main chain.

Styrene-butadiene rubber that is modified at a molecular terminal can be produced by reacting any of various modifying agents with a terminal of a styrene-butadiene copolymer having an active terminal according to a method described in WO2003/046020A1 or JP2007-217562A, for example.

In one preferred embodiment, the styrene-butadiene rubber that is modified at a molecular terminal can be produced by reacting an aminoalkoxysilane compound with a terminal of a styrene-butadiene copolymer having a cis-1,4 bond content of 75% or more that includes an active terminal, and then causing reaction with a carboxylic acid partial ester of a polyhydric alcohol to perform stabilization according to a method described in WO2003/046020A1 or JP2007-217562A.

The term "carboxylic acid partial ester of a polyhydric alcohol" refers to a partial ester that is an ester of a polyhydric alcohol and a carboxylic acid and that includes at least one hydroxy group. Specifically, it is preferable to use an ester of a saccharide or modified saccharide having a carbon number of 4 or more with a fatty acid. This ester is even more preferably: (1) a fatty acid partial ester of a polyhydric alcohol and particularly a partial ester (monoester, diester, or triester) of a saturated higher fatty acid or unsaturated higher fatty acid having a carbon number of 10 to 20 with a polyhydric alcohol; or (2) an ester compound in which 1 to 3 polyhydric alcohols are bonded to a partial ester of a polybasic carboxylic acid and a higher alcohol.

The polyhydric alcohol that is used as a raw material of the partial ester is preferably a saccharide (optionally hydrogenated) that includes at least three hydroxy groups and has a carbon number of 5 or 6, a glycol, a polyhydroxy compound, or the like. The fatty acid used as a raw material is preferably a saturated or unsaturated fatty acid having a carbon number of 10 to 20 and may be stearic acid, lauric acid, or palmitic acid, for example.

Of fatty acid partial esters of polyhydric alcohols, sorbitan fatty acid esters are preferable, specific examples of which include sorbitan monolaurate, sorbitan monopalmitate, sorbitan monostearate, sorbitan tristearate, sorbitan monooleate, and sorbitan trioleate.

Although no specific limitations are made, an aminoalkoxysilane compound represented by the following general formula (i) is preferable as the aminoalkoxysilane compound.

$$R^{11}_{a}\text{-Si-}(OR^{12})_{4-a} \cdots \qquad (i)$$

In general formula (i), $R^{11}$ and $R^{12}$ each independently represent a monovalent aliphatic hydrocarbon group having a carbon number of 1 to 20 or a monovalent aromatic hydrocarbon group having a carbon number of 6 to 18, at least one of $R^{11}$ and $R^{12}$ is substituted with an amino group, a is an integer of 0 to 2, and in a case in which more than one $OR^{12}$ is present, each $OR^{12}$ may be the same or different. Moreover, an active proton is not included in the molecule.

An aminoalkoxysilane compound represented by the following general formula (ii) is also preferable as the aminoalkoxysilane compound.

[Chem. 1]

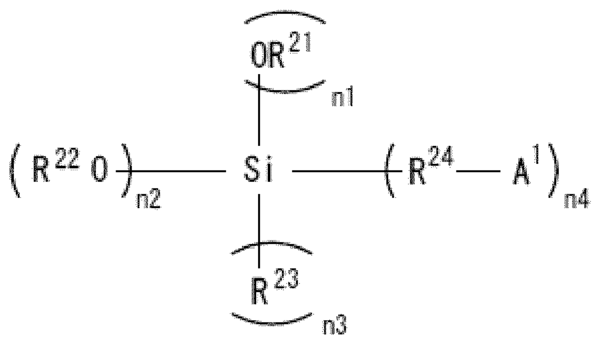

・・・・(ii)

In general formula (ii), n1 + n2 + n3 + n4 = 4 (with a proviso that n2 is an integer of 1 to 4 and n1, n2, and n4 are integers of 0 to 3).

$A^1$ is one or more functional groups selected from a saturated cyclic tertiary amine compound residual group, an unsaturated cyclic tertiary amine compound residual group, a ketimine residual group, a nitrile group, a (thio)isocyanate group, an isocyanuric acid trihydrocarbyl ester group, a nitrile group, a pyridine group, a (thio)ketone group, an amide group, and a primary or secondary amino group including a hydrolyzable group. In a case in which n4 is 2 or more, each

$A^1$ may be the same or different, and $A^1$ may be a divalent group that is bonded to Si to form a cyclic structure.

$R^{21}$ is a monovalent aliphatic or alicyclic hydrocarbon group having a carbon number of 1 to 20 or a monovalent aromatic hydrocarbon group having a carbon number of 6 to 18, and in a case in which n1 is 2 or more, each $R^{21}$ may be the same or different.

$R^{22}$ is a monovalent aliphatic or alicyclic hydrocarbon group having a carbon number of 1 to 20 or a monovalent aromatic hydrocarbon group having a carbon number of 6 to 18, either of which may include a nitrogen atom and/or a silicon atom. In a case in which n2 is 2 or more, each $R^{22}$ may be the same or different, or may form a ring with the other thereof.

$R^{23}$ is a monovalent aliphatic or alicyclic hydrocarbon group having a carbon number of 1 to 20, a monovalent aromatic hydrocarbon group having a carbon number of 6 to 18, or a halogen atom, and in a case in which n3 is 2 or more, each $R^{23}$ may be the same or different.

$R^{24}$ is a divalent aliphatic or alicyclic hydrocarbon group having a carbon number of 1 to 20 or a divalent aromatic hydrocarbon group having a carbon number of 6 to 18, and in a case in which n4 is 2 or more, each $R^{24}$ may be the same or different.

The hydrolyzable group in the primary or secondary amino group including a hydrolyzable group is preferably a trimethylsilyl group or a tertbutyldimethylsilyl group, and is particularly preferably a trimethylsilyl group.

The aminoalkoxysilane compound represented by general formula (ii) is preferably an aminoalkoxysilane compound represented by the following general formula (iii).

[Chem. 2]

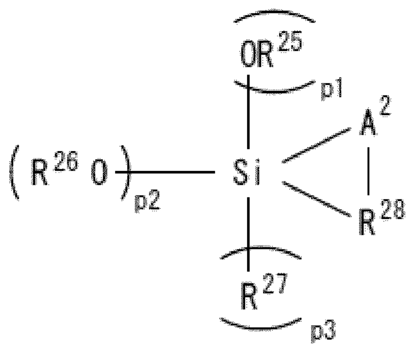

· · · · ( iii )

In general formula (iii), p1 + p2 + p3 = 2 (with a proviso that p2 is an integer of 1 to 2 and p1 and p3 are integers of 0 to 1).

$A^2$ is NRa (Ra is a monovalent hydrocarbon group, a hydrolyzable group, or a nitrogen-containing organic group).

$R^{25}$ is a monovalent aliphatic or alicyclic hydrocarbon group having a carbon number of 1 to 20 or a monovalent aromatic hydrocarbon group having a carbon number of 6 to 18.

$R^{26}$ is a monovalent aliphatic or alicyclic hydrocarbon group having a carbon number of 1 to 20, a monovalent aromatic hydrocarbon group having a carbon number of 6 to 18, or a nitrogen-containing organic group, any of which may include a nitrogen atom and/or a silicon atom. In a case in which p2 is 2, each $R^{26}$ may be the same or different, or may form a ring with the other thereof.

$R^{27}$ is a monovalent aliphatic or alicyclic hydrocarbon group having a carbon number of 1 to 20, a monovalent aromatic hydrocarbon group having a carbon number of 6 to 18, or a halogen atom.

$R^{28}$ is a divalent aliphatic or alicyclic hydrocarbon group having a carbon number of 1 to 20 or a divalent aromatic hydrocarbon group having a carbon number of 6 to 18.

The hydrolyzable group is preferably a trimethylsilyl group or a tertbutyldimethylsilyl group, and is particularly preferably a trimethylsilyl group.

The aminoalkoxysilane compound represented by general formula (ii) may also preferably be an aminoalkoxysilane compound represented by the following general formula (iv) or the following general formula (v).

[Chem. 3]

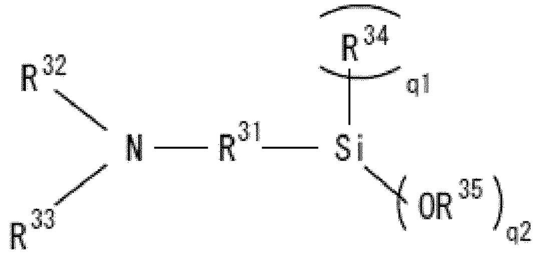

· · · · (iv)

In general formula (iv), q1 + q2 = 3 (with a proviso that q1 is an integer of 0 to 2 and q2 is an integer of 1 to 3).

$R^{31}$ is a divalent aliphatic or alicyclic hydrocarbon group having a carbon number of 1 to 20 or a divalent aromatic hydrocarbon group having a carbon number of 6 to 18.

$R^{12}$ and $R^{33}$ are each independently a hydrolyzable group, a monovalent aliphatic or alicyclic hydrocarbon group having a carbon number of 1 to 20, or a monovalent aromatic hydrocarbon group having a carbon number of 6 to 18.

$R^{34}$ is a monovalent aliphatic or alicyclic hydrocarbon group having a carbon number of 1 to 20 or a monovalent aromatic hydrocarbon group having a carbon number of 6 to 18, and in a case in which q1 is 2, each $R^{34}$ may be the same or different.

$R^{35}$ is a monovalent aliphatic or alicyclic hydrocarbon group having a carbon number of 1 to 20 or a monovalent aromatic hydrocarbon group having a carbon number of 6 to 18, and in a case in which q2 is 2 or more, each $R^{35}$ may be the same or different.

[Chem. 4]

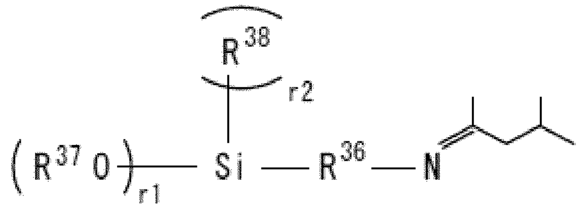

· · · · (v)

In general formula (v), r1 + r2 = 3 (with a proviso that r1 is an integer of 1 to 3 and r2 is an integer of 0 to 2).

$R^{36}$ is a divalent aliphatic or alicyclic hydrocarbon group having a carbon number of 1 to 20 or a divalent aromatic hydrocarbon group having a carbon number of 6 to 18.

$R^{37}$ is a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having a carbon number of 1 to 20, or a monovalent aromatic hydrocarbon group having a carbon number of 6 to 18, and in a case in which r1 is 2 or more, each $R^{37}$ may be the same or different.

$R^{38}$ is a hydrocarbyloxy group having a carbon number of 1 to 20, a monovalent aliphatic or alicyclic hydrocarbon group having a carbon number of 1 to 20, or a monovalent aromatic hydrocarbon group having a carbon number of 6 to 18, and in a case in which r2 is 2, each $R^{38}$ may be the same or different.

A specific example of the aminoalkoxysilane compound represented by general formula (v) is N-(1,3-dimethylbutylidene)-3-triethoxysilyl-1-propanamine.

The aminoalkoxysilane compound represented by general formula (ii) may also preferably be an aminoalkoxysilane compound represented by the following general formula (vi) or the following general formula (vii).

[Chem. 5]

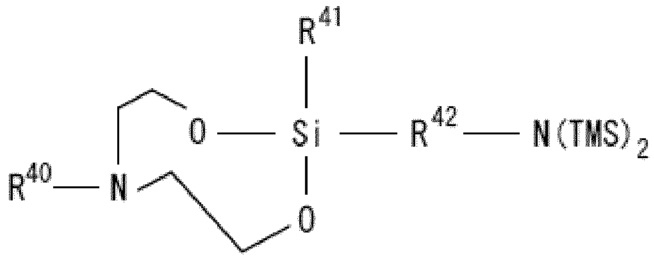

· · · · (vi)

In general formula (vi), $R^{40}$ is a trimethylsilyl group, a monovalent aliphatic or alicyclic hydrocarbon group having a carbon number of 1 to 20, or a monovalent aromatic hydrocarbon group having a carbon number of 6 to 18.

$R^{41}$ is a hydrocarbyloxy group having a carbon number of 1 to 20, a monovalent aliphatic or alicyclic hydrocarbon group having a carbon number of 1 to 20, or a monovalent aromatic hydrocarbon group having a carbon number of 6 to 18.

$R^{42}$ is a divalent aliphatic or alicyclic hydrocarbon group having a carbon number of 1 to 20 or a divalent aromatic hydrocarbon group having a carbon number of 6 to 18.

TMS represents a trimethylsilyl group (same applies hereinafter).

[Chem. 6]

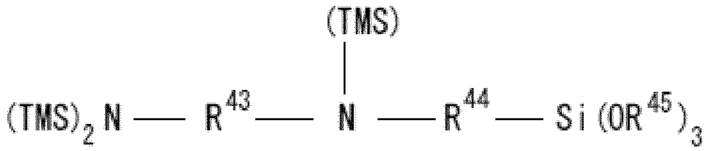

· · · · (vii)

In general formula (vii), $R^{43}$ and $R^{44}$ are each independently a divalent aliphatic or alicyclic hydrocarbon group having a carbon number of 1 to 20 or a divalent aromatic hydrocarbon group having a carbon number of 6 to 18.

$R^{45}$ is a monovalent aliphatic or alicyclic hydrocarbon group having a carbon number of 1 to 20 or a monovalent aromatic hydrocarbon group having a carbon number of 6 to 18, and each $R^{45}$ may be the same or different.

The aminoalkoxysilane compound represented by general formula (ii) may also preferably be an aminoalkoxysilane compound represented by the following general formula (viii) or the following general formula (ix).

[Chem. 7]

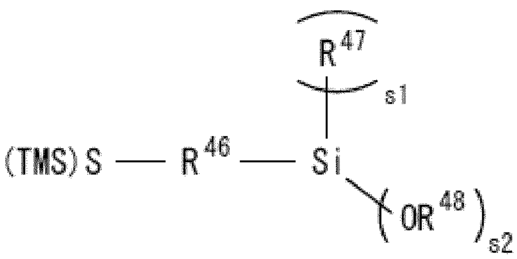

· · · · (viii)

In general formula (viii), s1 + s2 = 3 (with a proviso that s1 is an integer of 0 to 2 and s2 is an integer of 1 to 3).

$R^{46}$ is a divalent aliphatic or alicyclic hydrocarbon group having a carbon number of 1 to 20 or a divalent aromatic hydrocarbon group having a carbon number of 6 to 18.

$R^{47}$ and $R^{48}$ are each independently a monovalent aliphatic or alicyclic hydrocarbon group having a carbon number of 1 to 20 or a monovalent aromatic hydrocarbon group having a carbon number of 6 to 18. A plurality of $R^{47}$ or $R^{48}$ may each be the same or different.

[Chem. 8]

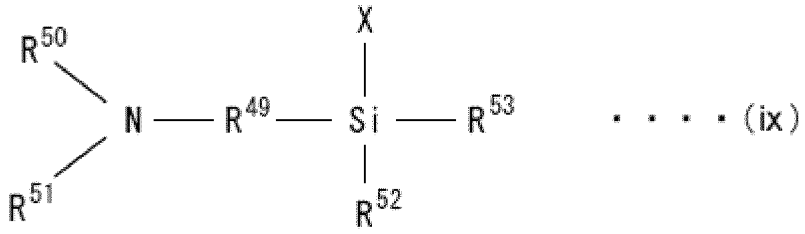

In general formula (ix), X is a halogen atom.

$R^{49}$ is a divalent aliphatic or alicyclic hydrocarbon group having a carbon number of 1 to 20 or a divalent aromatic hydrocarbon group having a carbon number of 6 to 18.

$R^{50}$ and $R^{51}$ are each independently a hydrolyzable group, a monovalent aliphatic or alicyclic hydrocarbon group having a carbon number of 1 to 20, or a monovalent aromatic hydrocarbon group having a carbon number of 6 to 18, or $R^{50}$ and $R^{51}$ are bonded to form a divalent organic group.

$R^{52}$ and $R^{53}$ are each independently a halogen atom, a hydrocarbyloxy group, a monovalent aliphatic or alicyclic hydrocarbon group having a carbon number of 1 to 20, or a monovalent aromatic hydrocarbon group having a carbon number of 6 to 18.

$R^{50}$ and $R^{51}$ are each preferably a hydrolyzable group, and this hydrolyzable group is preferably a trimethylsilyl group or a tertbutyldimethylsilyl group, and particularly preferably a trimethylsilyl group.

The aminoalkoxysilane compound represented by general formula (ii) may also preferably be an aminoalkoxysilane compound represented by the following general formula (x), the following general formula (xi), the following general formula (xii), or the following general formula (xiii).

[Chem. 9]

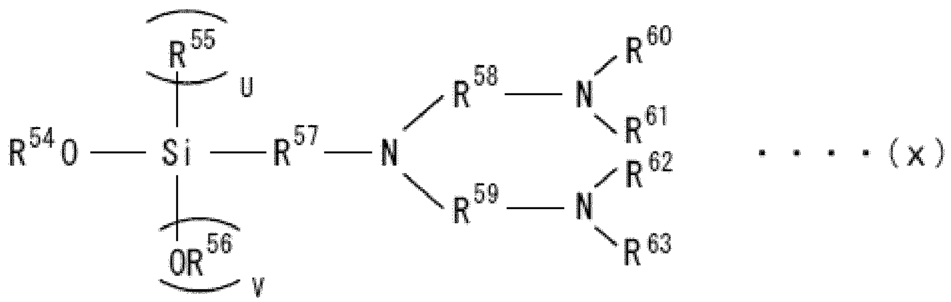

[Chem. 10]

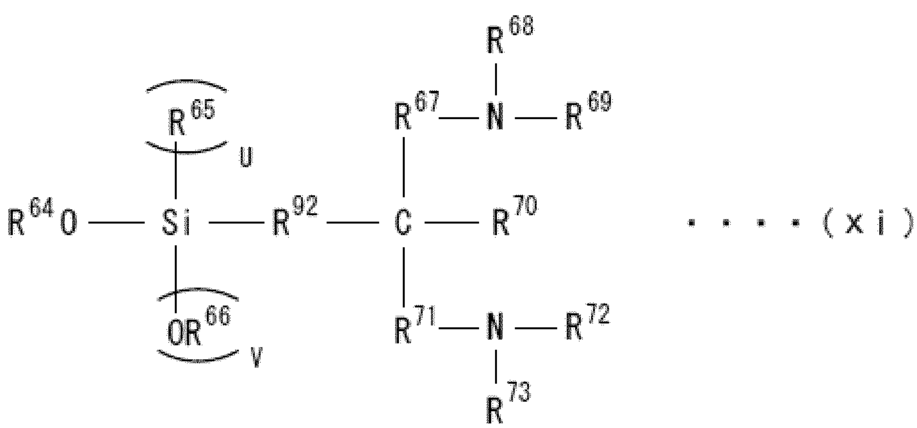

[Chem. 11]

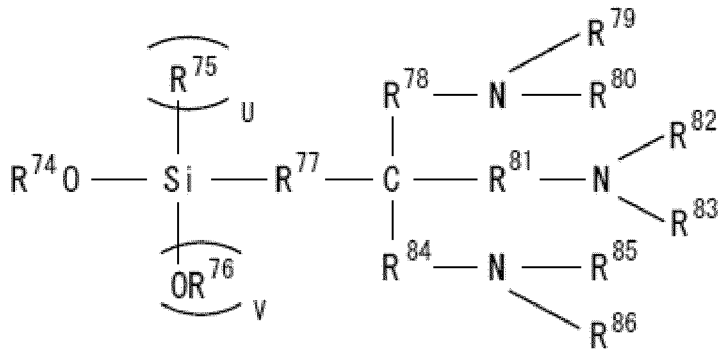

· · · · (xii)

[Chem. 12]

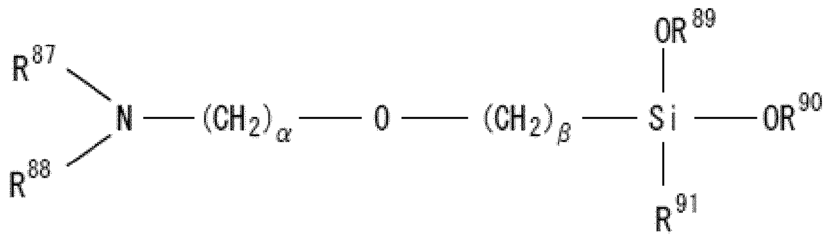

· · · · (xiii)

In general formulae (x) to (xiii), symbols U and V are integers of 0 to 2 that satisfy U + V = 2.

$R^{54}$ to $R^{92}$ in general formulae (x) to (xiii) may be the same or different and are each a monovalent or divalent aliphatic or alicyclic hydrocarbon group having a carbon number of 1 to 20 or a monovalent or divalent aromatic hydrocarbon group having a carbon number of 6 to 18.

$\alpha$ and $\beta$ in general formula (xiii) are integers of 0 to 5.

Of compounds that satisfy general formula (x), general formula (xi), and general formula (xii), particularly N1,N1,N7,N7-tetramethyl-4-((trimethoxysilyl)methyl)heptane-1,7-diamine, 2-((hexyl-dimethoxysilyl)methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, and 4-(3-(dimethylamino)propyl)-N1,N1,N7,N7-tetramethyl-4-((trimethoxysilyl)methyl)heptane-1,7-diamine are preferable.

Moreover, of compounds satisfying general formula (xiii), particularly N,N-dimethyl-2-(3-(dimethoxymethylsilyl)propoxy)ethanamine, N,N-bis(trimethylsilyl)-2-(3-(trimethoxysilyl)propoxy)ethanamine, N,N-dimethyl-2-(3-(trimethoxysilyl)propoxy)ethanamine, and N,N-dimethyl-3-(3-(trimethoxysilyl)propoxy)propan-1-amine are preferable.

--Modified styrene-butadiene rubber of second preferred embodiment--

A case in which the styrene-butadiene rubber (SBR) is modified by a coupling agent represented by the following general formula (I) is also preferable. In this case, high fuel efficiency and wear resistance performance of a tire in which the rubber composition is adopted can be further improved.

[Chem. 13]

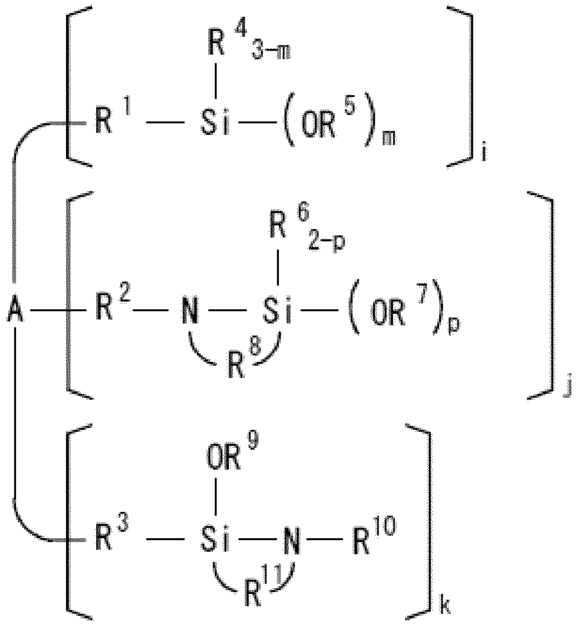

· · · · (I)

In general formula (I), $R^1$, $R^2$, and $R^3$ each independently represent a single bond or an alkylene group having a carbon number of 1 to 20.

$R^4$, $R^5$, $R^6$, $R^7$, and $R^9$ each independently represent an alkyl group having a carbon number of 1 to 20.

$R^8$ and $R^{11}$ each independently represent an alkylene group having a carbon number of 1 to 20.

$R^{10}$ represents an alkyl group or trialkylsilyl group having a carbon number of 1 to 20.

m represents an integer of 1 to 3, and p represents 1 or 2.

In a case in which any one of $R^1$ to $R^{11}$, m, and p is present in plurality, each thereof is independent.

i, j, and k each independently represent an integer of 0 to 6, with a proviso that (i + j + k) is an integer of 3 to 10.

A represents a hydrocarbon group having a carbon number of 1 to 20 or an organic group having a carbon number of 1 to 20 that includes one or more types of atoms selected from the group consisting of an oxygen atom, a nitrogen atom, a silicon atom, a sulfur atom, and a phosphorus atom and that does not include active hydrogen.

In general formula (I), the hydrocarbon group represented by A encompasses saturated, unsaturated, aliphatic, and aromatic hydrocarbon groups. The organic group not including active hydrogen is, for example, an organic group that does not have a functional group including active hydrogen such as a hydroxy group (-OH), a secondary amino group (>NH), a primary amino group ($-NH_2$), or a sulfhydryl group (-SH).

It is preferable that the styrene-butadiene rubber modified by the coupling agent represented by general formula (I) has a weight-average molecular weight (Mw) of $20 \times 10^4$ to $300 \times 10^4$, includes 0.25 mass% to 30 mass% of modified styrene-butadiene rubber having a molecular weight of $200 \times 10^4$ to $500 \times 10^4$ relative to the total amount of the modified styrene-butadiene rubber, and has a contraction factor (g') of less than 0.64.

Typically, a branched polymer tends to have smaller molecular size than a linear polymer with the same absolute molecular weight. The contraction factor (g') is an index of the ratio of the size occupied by the molecule relative to a linear polymer assumed to have the same absolute molecular weight. That is, the contraction factor (g') tends to be lower when the degree of branching of the polymer is higher. In this embodiment, intrinsic viscosity is used as an index of the molecular size, and the linear polymer is assumed to be in accordance with a relational expression of intrinsic viscosity $[\eta] = -3.883M^{0.771}$. The contraction factor (g') of the modified styrene-butadiene rubber at each absolute molecular weight is calculated, and an average value of the contraction factor (g') when the absolute molecular weight is $100 \times 10^4$ to $200 \times 10^4$ is taken to be the contraction factor (g') of the modified styrene-butadiene rubber. Herein, a "branching point" is formed as a result of one polymer having another polymer bonded directly or indirectly thereto. Moreover, the "degree of branching" is the number of polymers that directly or indirectly bond to one another at one branching point. For example, in a case in which five styrene-butadiene copolymer chains described below indirectly bond to one another via a coupling residual group described below, the degree of branching is 5. The "coupling residual group" is a constitutional unit of the modified styrene-butadiene rubber that is bonded to the styrene-butadiene copolymer chains and is, for example, a coupling agent-derived structural unit that is formed by reacting the subsequently described styrene-butadiene copolymer and the coupling agent. Moreover, the "styrene-butadiene copolymer chains" are constitutional units of the modified styrene-butadiene rubber and are, for example, styrene-butadiene copolymer-derived structural units formed by reacting the subsequently described styrene-butadiene copolymer and the coupling agent.

The contraction factor (g') is preferably less than 0.64, more preferably 0.63 or less, more preferably 0.60 or

less, even more preferably 0.59 or less, and further preferably 0.57 or less. No specific limitations are placed on the lower limit for the contraction factor (g'). The contraction factor (g') may be below the limit of detection, but is preferably 0.30 or more, more preferably 0.33 or more, even more preferably 0.35 or more, and further preferably 0.45 or more. The use of a modified styrene-butadiene rubber having a contraction factor (g') within any of these ranges improves processability of the rubber composition.

Since the contraction factor (g') tends to depend on the degree of branching, the contraction factor (g') can be controlled using the degree of branching as an index, for example. Specifically, a modified styrene-butadiene rubber having a degree of branching of 6 tends to have a contraction factor (g') of not less than 0.59 and not more than 0.63, whereas a modified styrene-butadiene rubber having a degree of branching of 8 tends to have a contraction factor (g') of not less than 0.45 and not more than 0.59.

The styrene-butadiene rubber that is modified with the coupling agent represented by general formula (I) is preferably branched and preferably has a degree of branching of 5 or more. Moreover, it is more preferable that the modified styrene-butadiene rubber includes one or more coupling residual groups and styrene-butadiene copolymer chains bonded to these coupling residual groups, and that the branching points include a branching point where five or more styrene-butadiene copolymer chains are bonded to one coupling residual group. By stipulating the structure of the modified styrene-butadiene rubber such that the degree of branching is 5 or more and such that branching points include a branching point where five or more styrene-butadiene copolymer chains are bonded to one coupling residual group, a contraction factor (g') of less than 0.64 can be more reliably obtained. Note that the number of styrene-butadiene copolymer chains bonded to one coupling residual group can be confirmed from the value of the contraction factor (g').

It is more preferable that the modified styrene-butadiene rubber is branched and has a degree of branching of 6 or more. Moreover, it is even more preferable that the modified styrene-butadiene rubber includes one or more coupling residual groups and styrene-butadiene copolymer chains bonded to these coupling residual groups, and that the branching points include a branching point where six or more styrene-butadiene copolymer chains are bonded to one coupling residual group. By stipulating the structure of the modified styrene-butadiene rubber such that the degree of branching is 6 or more and such that branching points include a branching point where six or more styrene-butadiene copolymer chains are bonded to one coupling residual group, a contraction factor (g') of 0.63 or less can be obtained.

It is even more preferable that the modified styrene-butadiene rubber is branched and has a degree of branching of 7 or more, and further preferable that the degree of branching is 8 or more. Although no specific limitations are placed on the upper limit for the degree of branching, the degree of branching is preferably 18 or less. Moreover, it is further preferable that the modified styrene-butadiene rubber includes one or more coupling residual groups and styrene-butadiene copolymer chains bonded to these coupling residual groups, and that the branching points include a branching point where seven or more styrene-butadiene copolymer chains are bonded to one coupling residual group, and particularly preferable that the branching points include a branching point where eight or more styrene-butadiene copolymer chains are bonded to one coupling residual group. By stipulating the structure of the modified styrene-butadiene rubber such that the degree of branching is 8 or more and such that the branching points include a branching point where eight or more styrene-butadiene copolymer chains are bonded to one coupling residual group, a contraction factor (g') of 0.59 or less can be obtained.

The styrene-butadiene copolymer chains preferably have at least one terminal thereof bonded to a silicon atom of the coupling residual group. In this case, terminals of a plurality of styrene-butadiene copolymer chains may be bonded to one silicon atom. Moreover, a terminal of a styrene-butadiene copolymer chain and an alkoxy group having a carbon number of 1 to 20 or a hydroxy group may be bonded to one silicon atom, thus resulting in the one silicon atom forming an alkoxysilyl group having a carbon number of 1 to 20 or a silanol group.

The modified styrene-butadiene rubber can be an oil-extended rubber to which extender oil has been added. Although the modified styrene-butadiene rubber may be non-oil-extended or may be oil-extended, the Mooney viscosity of the modified styrene-butadiene rubber measured at 100°C is preferably not less than 20 and not more than 100, and more preferably not less than 30 and not more than 80 from a viewpoint of wear resistance performance.

The weight-average molecular weight (Mw) of the modified styrene-butadiene rubber is preferably not less than $20 \times 10^4$ and not more than $300 \times 10^4$, more preferably $50 \times 10^4$ or more, more preferably $64 \times 10^4$ or more, and even more preferably $80 \times 10^4$ or more. Moreover, the weight-average molecular weight is preferably $250 \times 10^4$ or less, more preferably $180 \times 10^4$ or less, and even more preferably $150 \times 10^4$ or less. When the weight-average molecular weight is $20 \times 10^4$ or more, low loss property and wear resistance of the rubber composition can be sufficiently improved. Moreover, when the weight-average molecular weight is $300 \times 10^4$ or less, processability of the rubber composition improves.

The modified styrene-butadiene rubber preferably includes not less than 0.25 mass% and not more than 30 mass% of modified styrene-butadiene rubber having a molecular weight of not less than $200 \times 10^4$ and not more than $500 \times 10^4$ (hereinafter, referred to as a "prescribed high molecular weight component") relative to the total amount (100 mass%) of the modified styrene-butadiene rubber. In a case in which the content of the prescribed high molecular weight component is not less than 0.25 mass% and not more than 30 mass%, low loss property and wear resistance of the

rubber composition can be sufficiently improved. The modified styrene-butadiene rubber preferably includes 1.0 mass% or more, more preferably includes 1.4 mass% or more, even more preferably includes 1.75 mass% or more, further preferably includes 2.0 mass% or more, particularly preferably includes 2.15 mass% or more, and extremely preferably includes 2.5 mass% or more of the prescribed high molecular weight component. Moreover, the modified styrene-butadiene rubber preferably includes 28 mass% or less, more preferably includes 25 mass% or less, even more preferably includes 20 mass% or less, and further preferably includes 18 mass% or less of the prescribed high molecular weight component.

Note that the "molecular weight" of a rubber component referred to in the present specification is a standard polystyrene-equivalent molecular weight obtained by GPC (gel permeation chromatography). In order to obtain a modified styrene-butadiene rubber in which the content of the prescribed high molecular weight component is within a range such as set forth above, it is preferable to control reaction conditions in the subsequently described polymerization step and reaction step. For example, in the polymerization step, the amount of a subsequently described organomonolithium compound that is used as a polymerization initiator may be adjusted. Moreover, in the polymerization step, a method using a residence time distribution may be used (i.e. the time distribution of a growth reaction may be widened) in both continuous polymerization mode and batch polymerization mode.

The molecular weight distribution (Mw/Mn) of the modified styrene-butadiene rubber, expressed by the ratio of the weight-average molecular weight (Mw) relative to the number-average molecular weight (Mn), is preferably not less than 1.6 and not more than 3.0. When the molecular weight distribution of the modified styrene-butadiene rubber is within this range, the rubber composition has good processability.

Although no specific limitations are placed on the method by which the modified styrene-butadiene rubber is produced, it is preferable that the production method includes a polymerization step of copolymerizing butadiene and styrene using an organomonolithium compound as a polymerization initiator to obtain a styrene-butadiene copolymer and a reaction step of reacting a reactive compound having a functionality of 5 or higher (hereinafter, also referred to as a "coupling agent") with active terminals of the styrene-butadiene copolymer.

The polymerization step is preferably polymerization by a growth reaction through a living anionic polymerization reaction, which makes it possible to obtain a styrene-butadiene copolymer having active terminals and to obtain a modified styrene-butadiene rubber with a high modification rate.

The styrene-butadiene copolymer is obtained through copolymerization of 1,3-butadiene and styrene.

The amount of the organomonolithium compound that is used as a polymerization initiator is preferably set based on the target molecular weight of the styrene-butadiene copolymer or modified styrene-butadiene rubber. The amounts of monomers such as 1,3-butadiene and styrene that are used relative to the used amount of the polymerization initiator are related to the degree of polymerization, and thus are related to the number-average molecular weight and/or the weight-average molecular weight. Accordingly, adjustment may be made to reduce the amount of the polymerization initiator in order to increase the molecular weight, or adjustment may be made to increase the amount of the polymerization initiator in order to reduce the molecular weight.

The organomonolithium compound is preferably an alkyllithium compound from the viewpoint of industrial availability and ease of polymerization reaction control. In this case, the obtained styrene-butadiene copolymer has an alkyl group at a terminal where polymerization starts. Examples of the alkyllithium compound include n-butyllithium, sec-butyllithium, tert-butyllithium, n-hexyllithium, benzyllithium, phenyllithium, and stilbenelithium. From a viewpoint of industrial availability and ease of polymerization reaction control, the alkyllithium compound is preferably n-butyllithium or sec-butyllithium. One of these organomonolithium compounds may be used individually, or two or more of these organomonolithium compounds may be used in combination.

Examples of polymerization reaction modes that can be used in the polymerization step include batch and continuous polymerization reaction modes. In the continuous mode, one reactor or two or more connected reactors may be used. As a reactor for the continuous mode, for example, a tank or tubular reactor equipped with a stirrer is used. In the continuous mode, it is preferable that monomers, an inert solvent, and a polymerization initiator are continuously fed to the reactor, that a polymer solution containing a polymer is obtained in the reactor, and that the polymer solution is continuously discharged. As a reactor for the batch mode, for example, a tank reactor equipped with a stirrer is used. In the batch mode, it is preferable that monomers, an inert solvent, and a polymerization initiator are fed, that the monomers are continuously or intermittently supplemented during the polymerization as necessary, that a polymer solution containing a polymer is obtained in the reactor, and that the polymer solution is discharged after completing the polymerization. In this embodiment, the continuous mode in which a polymer can be continuously discharged and supplied to the next reaction in a short period of time is preferable in order to obtain a styrene-butadiene copolymer having a high active terminal ratio.

In the polymerization step, the polymerization is preferably performed in an inert solvent. Examples of the solvent include hydrocarbon-based solvents such as saturated hydrocarbons and aromatic hydrocarbons. Specific examples of hydrocarbon-based solvents include, but are not limited to, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and hydrocarbons that are mixtures thereof. Treating allenes and acetylenes that are impurities using an organometallic compound prior to the polymerization reaction tends to result in a styrene-butadiene copolymer having a high concentration of active terminals and thus is preferable because a modified styrene-butadiene rubber having a high modification rate tends to be obtained.

A polar compound may be added in the polymerization step. The addition of a polar compound can cause random copolymerization of styrene with 1,3-butadiene. Moreover, it also tends to be possible to use the polar compound as a vinylating agent for controlling the microstructure of a 1,3-butadiene portion.

Examples of the polar compound include ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium-tert-amylate, potassium-tert-butylate, sodium-tert-butylate, and sodium amylate; and phosphine compounds such as triphenylphosphine. One of these polar compounds may be used individually, or two or more of these polar compounds may be used in combination.

In the polymerization step, the polymerization temperature is preferably 0°C or higher, more preferably 120°C or lower, and particularly preferably not lower than 50°C and not higher than 100°C from a viewpoint of productivity. When the polymerization temperature is within a range such as set forth above, it tends to be possible to ensure a sufficient amount of reaction of the coupling agent with active terminals after polymerization is complete.

The bound butadiene content in the styrene-butadiene copolymer or modified styrene-butadiene rubber is not specifically limited but is preferably not less than 40 mass% and not more than 100 mass%, and more preferably not less than 55 mass% and not more than 80 mass%.

Moreover, the bound styrene content in the styrene-butadiene copolymer or modified styrene-butadiene rubber is not specifically limited but is preferably more than 0 mass% and not more than 60 mass%, and more preferably not less than 20 mass% and not more than 45 mass%.

When the bound butadiene content and the bound styrene content are within any of the ranges set forth above, low loss property and wear resistance performance of the rubber composition can be further improved.

Note that the bound styrene content can be measured using phenyl group ultraviolet absorption, and then the bound butadiene content can be determined from the measured bound styrene content.

The vinyl bond content among butadiene bond units in the styrene-butadiene copolymer or modified styrene-butadiene rubber is not specifically limited but is preferably not less than 10 mol% and not more than 75 mol%, and more preferably not less than 20 mol% and not more than 65 mol%. When the vinyl bond content is within any of the ranges set forth above, low loss property and wear resistance performance of the rubber composition can be further improved.

Note that the vinyl bond content (1,2-bond content) among butadiene bond units can be determined for the modified styrene-butadiene rubber by the Hampton method (R.R. Hampton, Analytical Chemistry, 21, 923 (1949)).

An alkoxysilyl group of the coupling agent represented by general formula (I) tends to react with an active terminal of the styrene-butadiene copolymer, resulting in dissociation of alkoxylithium and formation of a bond between a terminal of a styrene-butadiene copolymer chain and silicon of the coupling residual group, for example. A value obtained by subtracting the number of SiOR eliminated through the reaction from the total number of SiOR included in one molecule of the coupling agent corresponds to the number of alkoxysilyl groups included in the coupling residual group. Moreover, an azasilacycle group of the coupling agent forms a >N-Li bond and a bond between a styrene-butadiene copolymer terminal and silicon of the coupling residual group. Note that the >N-Li bond tends to readily change to >NH and LiOH with water or the like used in finishing. Moreover, in the case of an alkoxysilyl group of the coupling agent that remains without reacting, this alkoxysilyl group tends to readily change to silanol (Si-OH group) with water or the like used in finishing.

The reaction temperature in the reaction step is preferably substantially equal to the polymerization temperature of the styrene-butadiene copolymer, more preferably not lower than 0°C and not higher than 120°C, and even more preferably not lower than 50°C and not higher than 100°C. The temperature change from after the polymerization step up until addition of the coupling agent is preferably 10°C or less, and more preferably 5°C or less.

The reaction time in the reaction step is preferably 10 seconds or more, and more preferably 30 seconds or more. With regards to the time from the end of the polymerization step to the start of the reaction step, a shorter time is preferable from a viewpoint of coupling rate, and a time of 5 minutes or less is more preferable.

Mixing in the reaction step may be any of mechanical stirring, stirring with a static mixer, and the like. In a case in which the polymerization step is in the continuous mode, the reaction step is also preferably in the continuous mode. As a reactor used in the reaction step, for example, a tank or tubular reactor equipped with a stirrer is used. The coupling agent may be diluted with an inert solvent and continuously supplied to the reactor. In a case in which the polymerization step is in the batch mode, the reaction step may be performed by a method of charging the polymerization reactor with the coupling agent or a method involving transfer to another reactor.

In general formula (I), A is preferably represented by any of the following general formulae (II) to (V). Through A being represented by any of general formulae (II) to (V), it is possible to obtain a modified styrene-butadiene rubber having even better performance.

[Chem. 14]

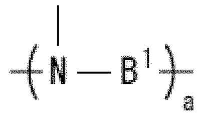

· · · · (II)

In general formula (II), $B^1$ represents a single bond or a hydrocarbon group having a carbon number of 1 to 20, and a represents an integer of 1 to 10. In a case in which more than one $B^1$ is present, each $B^1$ is independent.

[Chem. 15]

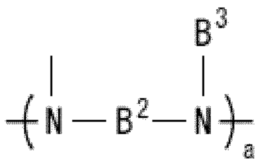

· · · · (III)

In general formula (III), $B^2$ represents a single bond or a hydrocarbon group having a carbon number of 1 to 20, $B^3$ represents an alkyl group having a carbon number of 1 to 20, and a represents an integer of 1 to 10. In a case in which more than one $B^2$ or $B^3$ is present, each $B^2$ or $B^3$ is independent.

[Chem. 16]

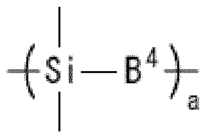

· · · · (IV)

In general formula (IV), $B^4$ represents a single bond or a hydrocarbon group having a carbon number of 1 to 20, and a represents an integer of 1 to 10. In a case in which more than one $B^4$ is present, each $B^4$ is independent.

[Chem. 17]

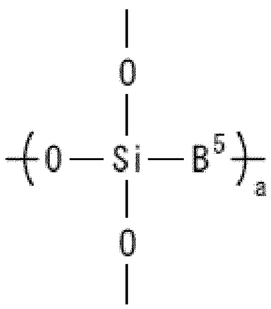

· · · · (V)

In general formula (V), $B^5$ represents a single bond or a hydrocarbon group having a carbon number of 1 to 20, and a represents an integer of 1 to 10. In a case in which more than one $B^5$ is present, each $B^5$ is independent.

For $B^1$, $B^2$, $B^4$, and $B^5$ in general formulae (II) to (V), the hydrocarbon group having a carbon number of 1 to 20 may be an alkylene group having a carbon number of 1 to 20 or the like.

Preferably, in general formula (I), A is represented by general formula (II) or (III) and k represents 0.

More preferably, in general formula (I), A is represented by general formula (II) or (III) and k represents 0, where

a in general formula (II) or (III) represents an integer of 2 to 10.

Even more preferably, in general formula (I), A is represented by general formula (II) and k represents 0, where a in general formula (II) represents an integer of 2 to 10.

Examples of such a coupling agent include bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]-(3-trismethoxysilylpropyl)-methyl-1,3-propanediamine. Of these coupling agents, tetrakis(3-trim ethoxysilylpropyl)-1,3-prop anediamine and tetrakis(3-trimethoxysilylpropyl)-1,3-bisaminomethylcyclohexane are particularly preferable.

The additive amount of the compound represented by general formula (I) as the coupling agent can be adjusted such that the reaction is performed with the number of moles of the coupling agent relative to the number of moles of the styrene-butadiene copolymer as a desired stoichiometric ratio. This tends to result in the desired degree of branching being achieved. Specifically, the number of moles of the polymerization initiator is preferably not less than 5.0 times, and more preferably not less than 6.0 times the number of moles of the coupling agent. In this case, the number of functional groups $((m - 1) \times i + p \times j + k)$ in the coupling agent in general formula (I) is preferably an integer of 5 to 10, and more preferably an integer of 6 to 10.

In order to obtain a modified styrene-butadiene rubber including the prescribed high molecular weight component, the molecular weight distribution (Mw/Mn) of the styrene-butadiene copolymer is preferably not less than 1.5 and not more than 2.5, and more preferably not less than 1.8 and not more than 2.2. The obtained modified styrene-butadiene rubber preferably has a single peak detected on a molecular weight curve according to GPC.

When the peak molecular weight of the modified styrene-butadiene rubber according to GPC is denoted as $Mp_1$ and the peak molecular weight of the styrene-butadiene copolymer according to GPC is denoted as $Mp_2$, the following formula preferably holds.

$$(Mp_1/Mp_2) < 1.8 \times 10 - 12 \times (Mp_2 - 120 \times 10^4)^2 + 2$$

More preferably, $Mp_2$ is not less than $20 \times 10^4$ and not more than $80 \times 10^4$ and $Mp_1$ is not less than $30 \times 10^4$ and not more than $150 \times 10^4$. $Mp_1$ and $Mp_2$ are determined by a method subsequently described in the EXAMPLES section.

The modification rate of the modified styrene-butadiene rubber is preferably 30 mass% or more, more preferably 50 mass% or more, and even more preferably 70 mass% or more. Through a modification rate of 30 mass% or more, it is possible to further improve low loss property and wear resistance performance of the rubber composition.

After the reaction step, a deactivator, a neutralizer, or the like may be added to the copolymer solution as necessary. Examples of the deactivator include, but are not limited to, water; and alcohols such as methanol, ethanol, and isopropanol. Examples of the neutralizer include, but are not limited to, carboxylic acids such as stearic acid, oleic acid, and versatic acid (mixture of highly branched carboxylic acids having a carbon number of 9 to 11, and mainly a carbon number of 10), aqueous solutions of inorganic acids, and carbon dioxide gas.

From a viewpoint of preventing gel formation after polymerization and a viewpoint of improving stability during processing, it is preferable that an antioxidant such as 2,6-di-tert-butyl-4-hydroxytoluene (BHT), n-octadecyl-3-(4'-hydroxy-3',5'-di-tert-butylphenol)propionate, or 2-methyl-4,6-bis[(octylthio)methyl]phenol, for example, is added to the modified styrene-butadiene rubber.

A commonly known method can be adopted as the method by which the modified styrene-butadiene rubber is obtained from the polymer solution. Examples of such methods include a method in which the polymer is filtered off after separating the solvent by steam stripping or the like and then the resultant is dehydrated and dried to obtain the polymer, a method in which the solution is concentrated in a flashing tank and the resultant is devolatilized by a vented extruder or the like, and a method in which the solution is directly devolatilized using a drum dryer or the like.

The modified styrene-butadiene rubber that is obtained by reacting the coupling agent represented by general formula (I) with the styrene-butadiene copolymer may, for example, be represented by the following general formula (VI).

[Chem. 18]

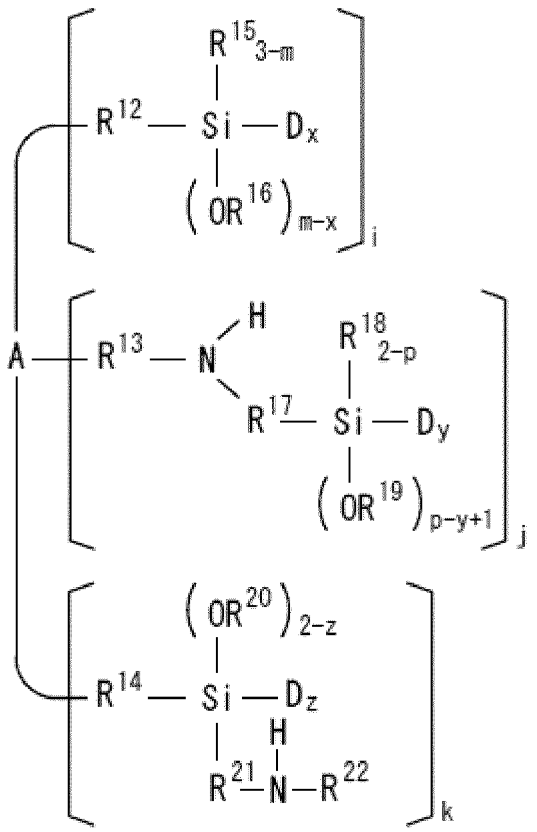

· · · · (VI)

In general formula (VI), D represents a styrene-butadiene copolymer chain. The weight-average molecular weight of styrene-butadiene copolymer chains is preferably $10 \times 10^4$ to $100 \times 10^4$. The "styrene-butadiene copolymer chain" is a constitutional unit of the modified styrene-butadiene rubber and is, for example, a styrene-butadiene copolymer-derived structural unit formed by reacting the styrene-butadiene copolymer and the coupling agent.

$R^{12}$, $R^{13}$, and $R^{14}$ each independently represent a single bond or an alkylene group having a carbon number of 1 to 20.

$R^{15}$ and $R^{18}$ each independently represent an alkyl group having a carbon number of 1 to 20.

$R^{16}$, $R^{19}$, and $R^{20}$ each independently represent a hydrogen atom or an alkyl group having a carbon number of 1 to 20.

$R^{17}$ and $R^{21}$ each independently represent an alkylene group having a carbon number of 1 to 20.

$R^{22}$ represents a hydrogen atom or an alkyl group having a carbon number of 1 to 20.

m and x represent integers of 1 to 3, where $x \leq m$; p represents 1 or 2 and y represents an integer of 1 to 3, where $y \leq (p + 1)$; and z represents an integer of 1 or 2.

In a case in which more than one D, $R^{12}$ to $R^{22}$, m, p, x, y, or z is present, each thereof is independent and may be the same as or different from others thereof.

Moreover, i represents an integer of 0 to 6, j represents an integer of 0 to 6, k represents an integer of 0 to 6, (i + j + k) is an integer of 3 to 10, and $((x \times i) + (y \times j) + (z \times k))$ is an integer of 5 to 30.

A represents a hydrocarbon group having a carbon number of 1 to 20 or an organic group that includes one or more types of atoms selected from the group consisting of an oxygen atom, a nitrogen atom, a silicon atom, a sulfur atom, and a phosphorus atom and that does not include active hydrogen. The hydrocarbon group represented by A encompasses saturated, unsaturated, aliphatic, and aromatic hydrocarbon groups. The organic group that does not include active hydrogen is, for example, an organic group that does not have a functional group including active hydrogen such as a hydroxy group (-OH), a secondary amino group (>NH), a primary amino group ($-NH_2$), or a sulfhydryl group (-SH).

In general formula (VI), A is preferably represented by any the previously described general formulae (II) to (V). Through A being represented by any of general formulae (II) to (V), it is possible to further improve low loss property and wear resistance performance of the rubber composition.

--Modified styrene-butadiene rubber of third preferred embodiment--

A case in which the styrene-butadiene rubber (SBR) has at least one terminal modified with a modifying agent

including a compound (alkoxysilane) represented by the following general formula (1) is also preferable.

[Chem. 19]

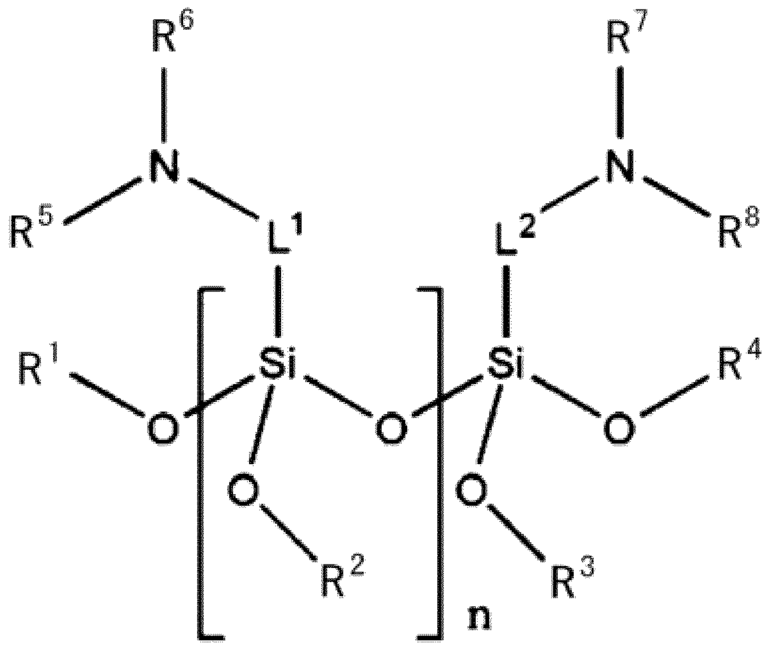

· · · · (1)

By using, as the rubber component, a styrene-butadiene rubber that has been modified with a modifying agent including a compound represented by general formula (1) that includes an oligosiloxane and a tertiary amino group, which are functional groups displaying filler affinity, the dispersibility of a filler such as silica can be increased. As a result, the rubber composition according to the present disclosure has significantly improved low loss property through improvement of filler dispersibility and also enables reduction of rolling resistance and improvement of high fuel efficiency of a tire in which the rubber composition is adopted.

In general formula (1), $R^1$ to $R^8$ are each independently an alkyl group having a carbon number of 1 to 20; $L^1$ and $L^2$ are each independently an alkylene group having a carbon number of 1 to 20; and n is an integer of 2 to 4.

Specifically, in formula (1), $R^1$ to $R^4$ may each independently be a substituted or unsubstituted alkyl group having a carbon number of 1 to 20. In a case in which $R^1$ to $R^4$ are substituted, $R^1$ to $R^4$ may each independently be substituted with one or more substituents selected from the group consisting of an alkyl group having a carbon number of 1 to 10, a cycloalkyl group having a carbon number of 3 to 10, an alkoxy group having a carbon number of 1 to 10, a cycloalkoxy group having a carbon number of 4 to 10, an aryl group having a carbon number of 6 to 12, an aryloxy group having a carbon number of 6 to 12, an alkanoyloxy group having a carbon number of 2 to 12 (Ra-COO-, where Ra is an alkyl group having a carbon number of 1 to 9), an aralkyloxy group having a carbon number of 7 to 13, an arylalkyl group having a carbon number of 7 to 13, and an alkylaryl group having a carbon number of 7 to 13.

More specifically, $R^1$ to $R^4$ may each be a substituted or unsubstituted alkyl group having a carbon number of 1 to 10. Even more specifically, $R^1$ to $R^4$ may each independently be a substituted or unsubstituted alkyl group having a carbon number of 1 to 6.

In formula (1), $R^5$ to $R^8$ are each independently a substituted or unsubstituted alkyl group having a carbon number of 1 to 20. Specifically, $R^5$ to $R^8$ may each be a substituted or unsubstituted alkyl group having a carbon number of 1 to 10, and may more specifically each be a substituted or unsubstituted alkyl group having a carbon number of 1 to 6. In a case in which $R^5$ to $R^8$ are substituted, $R^5$ to $R^8$ may be substituted with substituents such as previously described for $R^1$ to $R^4$.

Note that in a situation in which $R^5$ to $R^8$ are hydrolyzable substituents rather than alkyl groups, the bonds of $N\text{-}R^5R^6$ and $N\text{-}R^7R^8$ may be hydrolyzed to N-H in the presence of water, which can negatively affect processability of the polymer.

More specifically, in the compound represented by formula (1), $R^1$ to $R^4$ may each be a methyl group or an ethyl group and $R^5$ to $R^8$ may each be an alkyl group having a carbon number of 1 to 10.

Amino groups in the compound represented by formula (1) (i.e., $N\text{-}R^5R^6$ and $N\text{-}R^7R^8$) are preferably each a tertiary amino group. The tertiary amino groups provide even better processability when the compound represented by

formula (1) is used as a modifying agent.

Note that in a situation in which a protecting group for protecting the amino group is bonded at any of $R^5$ to $R^8$ or in a situation in which hydrogen is bonded at any of $R^5$ to $R^8$, it may be difficult to obtain the effect of the compound represented by formula (1). In a situation in which hydrogen is bonded, anions react with hydrogen during the modification, resulting in loss of reactivity and rendering the modification reaction itself impossible. In a situation in which a protecting group is bonded, the modification reaction will proceed but subsequent processing performed while in a bonded state with a polymer terminal results in deprotection by hydrolysis and formation of a primary or secondary amino group. The deprotected primary or secondary amino group may bring about high viscosity of compounded material during subsequent compounding and may cause reduction of processability.

$L^1$ and $L^2$ in the compound represented by formula (1) are each independently a substituted or unsubstituted alkylene group having a carbon number of 1 to 20.

More specifically, $L^1$ and $L^2$ may each independently be an alkylene group having a carbon number of 1 to 10. Even more specifically, $L^1$ and $L^2$ may each be an alkylene group having a carbon number of 1 to 6 such as a methylene group, an ethylene group, or a propylene group.

With regards to $L^1$ and $L^2$ in the compound represented by formula (1), a better effect is achieved with a shorter distance between a Si atom and a N atom in the molecule. However, in a situation in which Si is directly bonded to N, the bond between Si and N may be broken during subsequent processing, and a secondary amino group formed in this situation is likely to be washed away by water in subsequent processing. It then becomes difficult for the produced modified styrene-butadiene rubber to bond with a filler such as silica through an amino group that promotes bonding with the filler, and, as a result, an effect of improving dispersibility of the filler may be reduced. In consideration of the improvement effect due to the length of bonding between Si and N described above, $L^1$ and $L^2$ are more preferably each independently an alkylene group having a carbon number of 1 to 3 such as a methylene group, an ethylene group, or a propylene group, and may, more specifically, each be a propylene group. Furthermore, $L^1$ and $L^2$ may be substituted with a substituent such as previously described for $R^1$ to $R^4$.

The compound represented by formula (1) is, for example, preferably any one of the compounds represented by the following structural formulae (1-1) to (1-5). This enables the achievement of even better low loss property.

[Chem. 20]

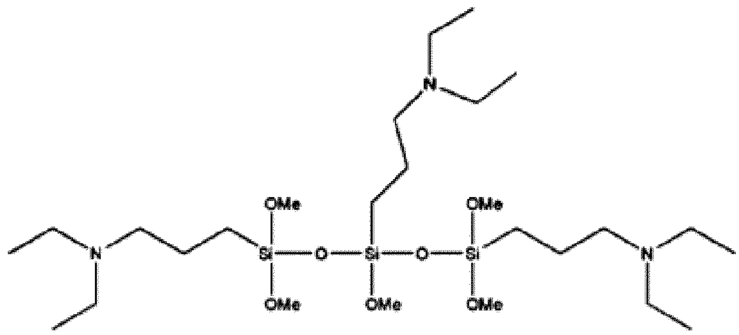

• • • • (1-1)

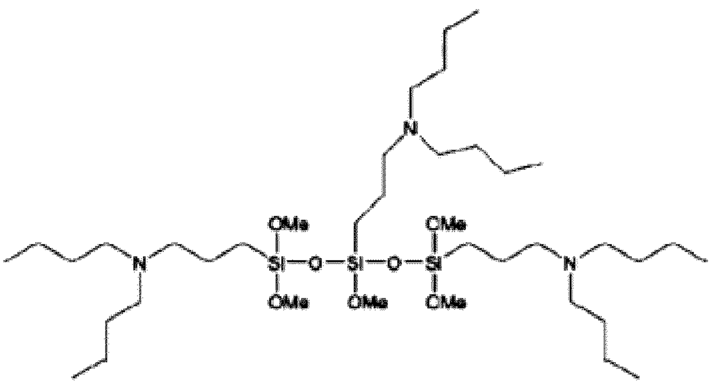

• • • • (1-2)

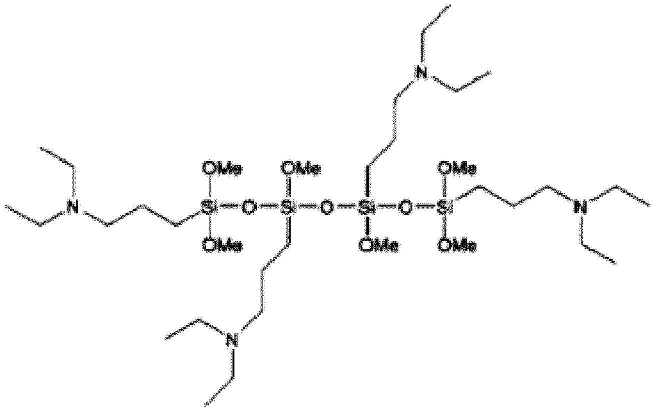

・・・・(1-3)

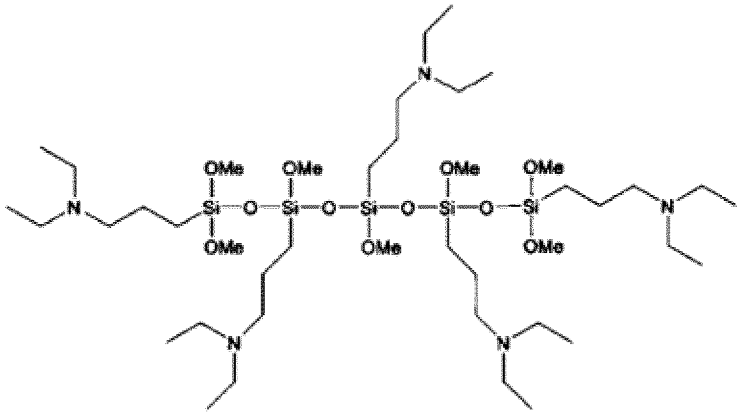

・・・・(1-4)

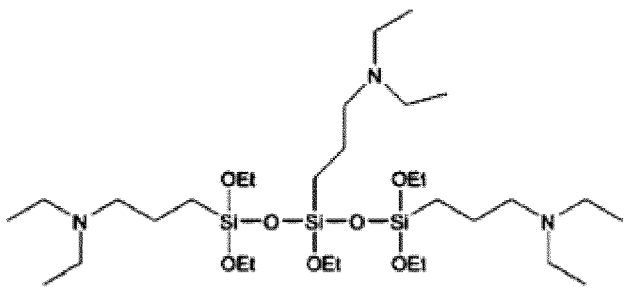

・・・・(1-5)

An alkoxysilane structure of the compound represented by formula (1) bonds to an active terminal of the styrene-butadiene copolymer, whereas a Si-O-Si structure and three or more amino groups bonded at terminals of the compound represented by formula (1) exhibit affinity with a filler such as silica, and thus the compound represented by formula (1) can promote bonding between the filler and the modified styrene-butadiene rubber as compared to a conventional modifying agent that includes one amino group in a molecule. Moreover, the degree of bonding of active terminals of the styrene-butadiene copolymer is uniform, and when molecular weight distribution change between before and after coupling is observed, the molecular weight distribution remains constant and does not increase after coupling as compared to before coupling. Consequently, physical properties of the modified styrene-butadiene rubber itself do not deteriorate, and it is possible to prevent aggregation of the filler in the rubber composition and increase dispersibility of the filler, which thereby enables improvement of processability of the rubber composition. These effects can particularly improve high fuel efficiency and wet gripping performance in a good balance when the rubber composition is adopted in a tire.

Note that the compound represented by formula (1) can be produced through a condensation reaction represented by the following reaction scheme.

[Chem. 21]

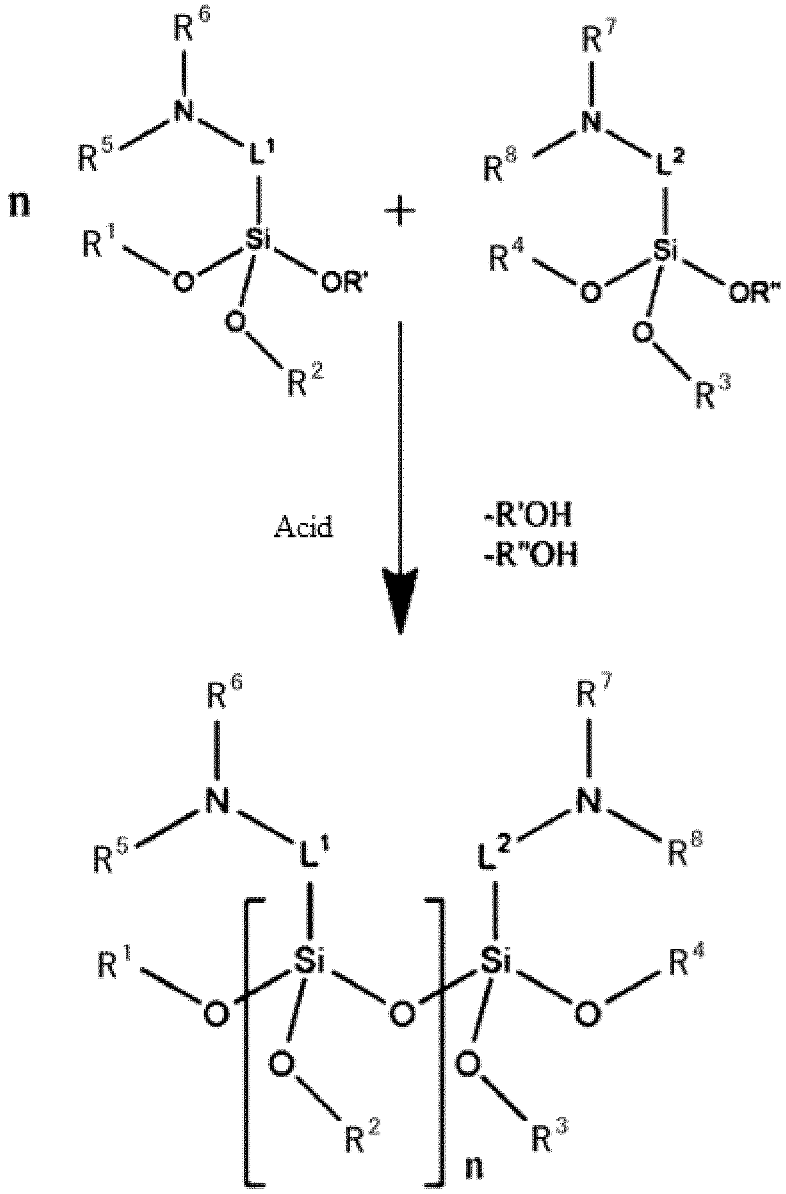


In this reaction scheme, $R^1$ to $R^8$, $L^1$, $L^2$, and n are the same as defined for the previously described formula (1), and R' and R" are arbitrary substituents that do not affect the condensation reaction. For example, R' and R" may each independently be the same as any one of $R^1$ to $R^4$.

The reaction of the preceding reaction scheme is caused to proceed in the presence of an acid. The acid may be any acid that is typically used in condensation reactions without any limitations. A person skilled in the art can select an acid that is most appropriate depending on various process variables such as the type of reactor in which the reaction is carried out, the starting materials, and the reaction temperature.

Note that the styrene-butadiene rubber that has been modified with a modifying agent including the compound represented by formula (1) can have a narrow molecular weight distribution (Mw/Mn; also referred to as "polydispersity index (PDI)") of 1.1 to 3.0. In a situation in which the molecular weight distribution of the modified styrene-butadiene rubber is more than 3.0 or less than 1.1, tensile characteristics and viscoelasticity may deteriorate upon adoption in the rubber composition. In consideration of noticeability of an effect of improving tensile characteristics and viscoelasticity through control of the molecular weight distribution of the modified styrene-butadiene rubber, it is preferable that the molecular weight distribution of the modified styrene-butadiene rubber is within a range of 1.3 to 2.0. Note that the modified styrene-butadiene rubber has a similar molecular weight distribution to the styrene-butadiene copolymer before modification as a result of the modifying agent described above being used.

The molecular weight distribution of the modified styrene-butadiene rubber can be calculated from the ratio (Mw/Mn) of the weight-average molecular weight (Mw) relative to the number-average molecular weight (Mn). The

number-average molecular weight (Mn) is a common average of individual polymer molecular weights obtained by measuring the molecular weights of n polymer molecules and dividing the total of these molecular weights by n, whereas the weight-average molecular weight (Mw) expresses a molecular weight distribution of the polymer composition. The average of total molecular weight can be expressed in grams per mole (g/mol).

The weight-average molecular weight and the number-average molecular weight are each a polystyrene-equivalent molecular weight analyzed by gel permeation chromatography (GPC).

The modified styrene-butadiene rubber satisfies the molecular weight distribution condition described above while also having a number-average molecular weight (Mn) of 50,000 g/mol to 2,000,000 g/mol. More specifically, the number-average molecular weight (Mn) may be 200,000 g/mol to 800,000 g/mol. The weight-average molecular weight (Mw) of the modified styrene-butadiene rubber is 100,000 g/mol to 4,000,000 g/mol, and, more specifically, may be 300,000 g/mol to 1,500,000 g/mol.

In a situation in which the modified styrene-butadiene rubber has a weight-average molecular weight (Mw) of less than 100,000 g/mol or a number-average molecular weight (Mn) of less than 50,000 g/mol, tensile characteristics may deteriorate upon adoption in the rubber composition. Moreover, in a situation in which the weight-average molecular weight (Mw) is more than 4,000,000 g/mol or the number-average molecular weight (Mn) is more than 2,000,000 g/mol, reduction of processability of the modified styrene-butadiene rubber may cause deterioration of workability of the rubber composition and make kneading thereof difficult, and it may also be difficult to sufficiently improve physical properties of the rubber composition.

More specifically, when the modified styrene-butadiene rubber satisfies conditions for the weight-average molecular weight (Mw) and the number-average molecular weight (Mn), as well as the molecular weight distribution described above, it is possible to improve viscoelasticity and processability of the rubber composition in a good balance when the modified styrene-butadiene rubber is adopted in the rubber composition.

The vinyl bond content of a butadiene portion of the modified styrene-butadiene rubber is preferably 5% or more, and more preferably 10% or more, and is preferably 60% or less. When the vinyl bond content of the butadiene portion is within any of the ranges set forth above, the glass-transition temperature can be adjusted to within a suitable range.

The Mooney viscosity (MV) of the modified styrene-butadiene rubber at 100°C is 40 to 140, and, more specifically, may be 60 to 100. When the styrene-butadiene rubber has a Mooney viscosity that is within any of the ranges set forth above, the styrene-butadiene rubber can display even better processability.

The Mooney viscosity can be measured by a Mooney viscometer and may, for example, be measured by Monsanto's MV2000E at 100°C and a rotor speed of 2 ± 0.02 rpm with a larger rotor. A sample that is used in this measurement may be left at room temperature (23 ± 3°C) for at least 30 minutes, 27 ± 3 g of the sample may subsequently be collected to fill the inside of a die cavity, and a platen may then be operated to perform measurement.

The modified styrene-butadiene rubber is preferably modified at one terminal by a modifying agent including the compound represented by general formula (1) as previously described and is also preferably further modified at the other terminal by a modifying agent including a compound represented by the following general formula (2). Through modification of both terminals of the modified styrene-butadiene rubber it is possible to further improve dispersibility of a filler in the rubber composition and to achieve a balance of higher levels of high fuel efficiency and wet gripping performance of a tire in which the rubber composition is adopted.

[Chem. 22]

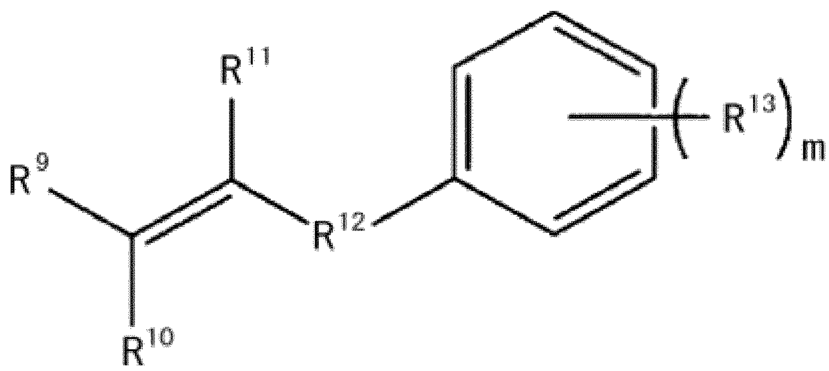

· · · · (2)

In general formula (2), $R^9$ to $R^{11}$ are each independently hydrogen; an alkyl group having a carbon number of 1 to 30; an alkenyl group having a carbon number of 2 to 30; an alkynyl group having a carbon number of 2 to 30; a heteroalkyl group having a carbon number of 1 to 30; a heteroalkenyl group having a carbon number of 2 to 30; a

heteroalkynyl group having a carbon number of 2 to 30; a cycloalkyl group having a carbon number of 5 to 30; an aryl group having a carbon number of 6 to 30; or a heterocyclic group having a carbon number of 3 to 30.

Moreover, in formula (2), $R^{12}$ is a single bond; a substituted or unsubstituted alkylene group having a carbon number of 1 to 20; a substituted or unsubstituted cycloalkylene group having a carbon number of 5 to 20; or a substituted or unsubstituted arylene group having a carbon number of 5 to 20, where the substituent with which any thereof is substituted is an alkyl group having a carbon number of 1 to 10, a cycloalkyl group having a carbon number of 5 to 10, or an aryl group having a carbon number of 6 to 20.

Furthermore, in formula (2), $R^{13}$ is an alkyl group having a carbon number of 1 to 30; an alkenyl group having a carbon number of 2 to 30; an alkynyl group having a carbon number of 2 to 30; a heteroalkyl group having a carbon number of 1 to 30; a heteroalkenyl group having a carbon number of 2 to 30; a heteroalkynyl group having a carbon number of 2 to 30; a cycloalkyl group having a carbon number of 5 to 30; an aryl group having a carbon number of 6 to 30; a heterocyclic group having a carbon number of 3 to 30; or a functional group represented by the following general formula (2a) or general formula (2b), m is an integer of 1 to 5, at least one $R^{13}$ is a functional group represented by the following general formula (2a) or general formula (2b), and in a case in which m is an integer of 2 to 5, each of the plurality of $R^{13}$ may be the same or different.

[Chem. 23]

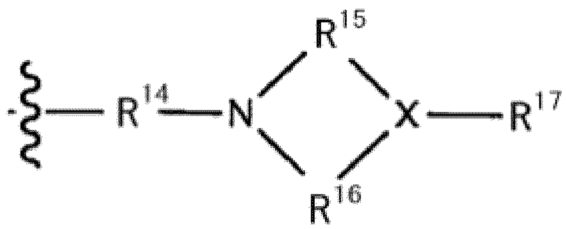

· · · · (2a)

In general formula (2a), $R^{14}$ is a substituted or unsubstituted alkylene group having a carbon number of 1 to 20; a substituted or unsubstituted cycloalkylene group having a carbon number of 5 to 20; or a substituted or unsubstituted arylene group having a carbon number of 6 to 20, where the substituent with which any thereof is substituted is an alkyl group having a carbon number of 1 to 10, a cycloalkyl group having a carbon number of 5 to 10, or an aryl group having a carbon number of 6 to 20.

Moreover, in formula (2a), $R^{15}$ and $R^{16}$ are each independently an alkylene group having a carbon number of 1 to 20 that is unsubstituted or is substituted with an alkyl group having a carbon number of 1 to 10, a cycloalkyl group having a carbon number of 5 to 10, or an aryl group having a carbon number of 6 to 20.

Furthermore, in formula (2a), $R^{17}$ is hydrogen; an alkyl group having a carbon number of 1 to 30; an alkenyl group having a carbon number of 2 to 30; an alkynyl group having a carbon number of 2 to 30; a heteroalkyl group having a carbon number of 1 to 30; a heteroalkenyl group having a carbon number of 2 to 30; a heteroalkynyl group having a carbon number of 2 to 30; a cycloalkyl group having a carbon number of 5 to 30; an aryl group having a carbon number of 6 to 30; or a heterocyclic group having a carbon number of 3 to 30, and X is a N, O, or S atom, with a proviso that $R^{17}$ is not present in a case in which X is O or S.

[Chem. 24]

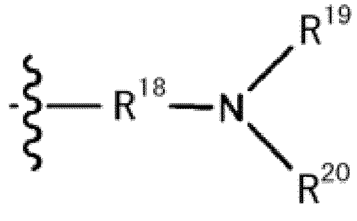

· · · · (2b)

In general formula (2b), $R^{18}$ is a substituted or unsubstituted alkylene group having a carbon number of 1 to 20; a substituted or unsubstituted cycloalkylene group having a carbon number of 5 to 20; or a substituted or unsubstituted arylene group having a carbon number of 6 to 20, where the substituent with which any thereof is substituted is an alkyl group having a carbon number of 1 to 10, a cycloalkyl group having a carbon number of 5 to 10, or an aryl group having a carbon number of 6 to 20.

Moreover, in formula (2b), $R^{19}$ and $R^{20}$ are each independently an alkyl group having a carbon number of 1 to 30; an alkenyl group having a carbon number of 2 to 30; an alkynyl group having a carbon number of 2 to 30; a heteroalkyl group having a carbon number of 1 to 30; a heteroalkenyl group having a carbon number of 2 to 30; a heteroalkynyl group having a carbon number of 2 to 30; a cycloalkyl group having a carbon number of 5 to 30; an aryl group having a carbon number of 6 to 30; or a heterocyclic group having a carbon number of 3 to 30.

In the compound represented by general formula (2), $R^9$ to $R^{11}$ may each independently be hydrogen; an alkyl group having a carbon number of 1 to 10; an alkenyl group having a carbon number of 2 to 10; or an alkynyl group having a carbon number of 2 to 10, $R^{12}$ may be a single bond; or an unsubstituted alkylene group having a carbon number of 1 to 10, and $R^{13}$ may be an alkyl group having a carbon number of 1 to 10; an alkenyl group having a carbon number of 2 to 10; an alkynyl group having a carbon number of 2 to 10; or a functional group represented by general formula (2a) or general formula (2b), where in general formula (2a), $R^{14}$ may be an unsubstituted alkylene group having a carbon number of 1 to 10, $R^{15}$ and $R^{16}$ may each independently be an unsubstituted alkylene group having a carbon number of 1 to 10, and $R^{17}$ may be an alkyl group having a carbon number of 1 to 10; a cycloalkyl group having a carbon number of 5 to 20; an aryl group having a carbon number of 6 to 20; or a heterocyclic group having a carbon number of 3 to 20, and where in general formula (2b), $R^{18}$ may be an unsubstituted alkylene group having a carbon number of 1 to 10, and $R^{19}$ and $R^{20}$ may each independently be an alkyl group having a carbon number of 1 to 10; a cycloalkyl group having a carbon number of 5 to 20; an aryl group having a carbon number of 6 to 20; or a heterocyclic group having a carbon number of 3 to 20.

More specifically, the compound represented by general formula (2) may be a compound represented by any one of the following structural formulae (2-1) to (2-3).

[Chem. 25]

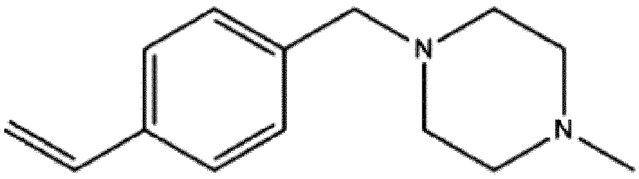

・・・・(2-1)

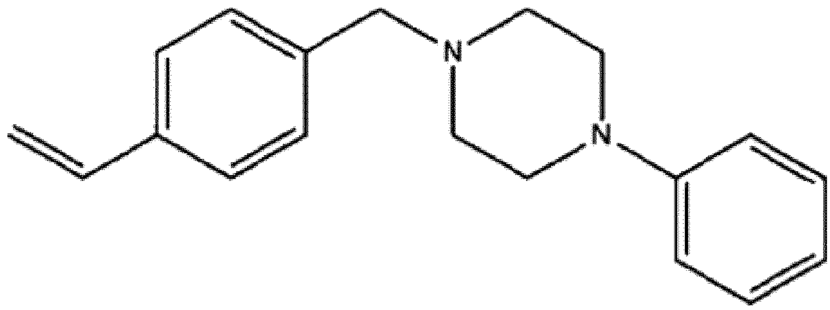

・・・・(2-2)

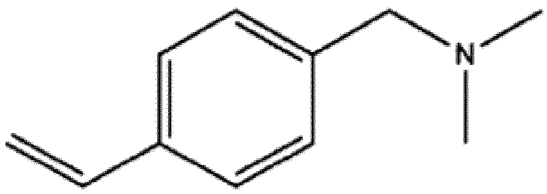

・・・・(2-3)

Note that in a case in which the styrene-butadiene copolymer is modified with a modifying agent including the compound represented by general formula (2), the modifying agent including the compound represented by formula (2) is used as a modification initiator.

Specifically, butadiene monomer and styrene monomer may be polymerized in a hydrocarbon solvent in the presence of a modifying agent including the compound represented by formula (2) so as to provide the styrene-butadiene copolymer with a modifying group derived from the compound represented by formula (2), for example.

(Reinforcing filler (B))

The rubber composition for a tire according to the present disclosure contains a reinforcing filler (B). Reinforcement of the rubber composition is improved through inclusion of the reinforcing filler (B). Examples of the reinforcing filler (B) include silica, carbon black, clay, talc, calcium carbonate, and aluminum hydroxide. One reinforcing filler (B) may be used individually, or two or more reinforcing fillers (B) may be used in combination.

No specific limitations are placed on the content of the reinforcing filler (B) in the rubber composition so long as the composition parameter P2 calculated by formula (I-2) is not less than a specific value. However, it is preferable that the content of the reinforcing filler (B) in the rubber composition is not less than 40 parts by mass and not more than 125 parts by mass relative to 100 parts by mass of the rubber component. Wet gripping and particularly wet gripping on porous asphalt paving can be further improved when the content of the reinforcing filler (B) is 40 parts by mass or more relative to 100 parts by mass of the rubber component, whereas the elastic modulus of the rubber composition does not become excessively high and reduction of wet gripping performance on various road surfaces of a tire in which the rubber composition is adopted can be more sufficiently inhibited when the content of the reinforcing filler (B) is 125 parts by mass or less relative to 100 parts by mass of the rubber component. From the same viewpoints, the content of the reinforcing filler (B) relative to 100 parts by mass of the rubber component is more preferably 55 parts by mass or more, more preferably 65 parts by mass or more, more preferably 70 parts by mass or more, even more preferably 75 parts by mass or more, and particularly preferably 80 parts by mass or more, and is more preferably 105 parts by mass or less, and more preferably 100 parts by mass or less.

The reinforcing filler (B) preferably includes silica. The use of silica enables more effective improvement of road surface robustness. Examples of the silica include wet silica (hydrous silicate), dry silica (anhydrous silicate), calcium silicate, and aluminum silicate, of which, wet silica is preferable. One of these types of silica may be used individually, or two or more of these types of silica may be used in combination.

In a case in which silica is used, it is even more preferable that the silica has a nitrogen adsorption specific surface area (BET method) of not less than 80 $m^2/g$ and less than 330 $m^2/g$. When the nitrogen adsorption specific surface area (BET method) of the silica is 80 $m^2/g$ or more, a tire in which the rubber composition is adopted can be sufficiently reinforced, and rolling resistance of the tire can be reduced. Moreover, when the nitrogen adsorption specific surface area (BET method) of the silica is less than 330 $m^2/g$, reduction of wet gripping performance on various road surfaces of a tire in which the rubber composition is adopted can be more sufficiently inhibited. From the same viewpoints, the nitrogen adsorption specific surface area (BET method) of the silica is preferably 110 $m^2/g$ or more, preferably 130 $m^2/g$ or more, preferably 150 $m^2/g$ or more, and more preferably 180 $m^2/g$ or more. Moreover, from a viewpoint of further improving wet gripping performance of a tire, the nitrogen adsorption specific surface area (BET method) of the silica is preferably 300 $m^2/g$ or less, more preferably 280 $m^2/g$ or less, and even more preferably 270 $m^2/g$ or less.

(Resin component (C))

The rubber composition for a tire according to the present disclosure contains a resin component (C). The resin component (C) is at least partially hydrogenated and has an SP value difference with the previously described isoprene-based rubber (A) of 1.40 $(cal/cm^3)^{1/2}$ or less. This resin component (C) has high miscibility with the isoprene-based rubber (A), results in control of mobility of the rubber component, and can improve hysteresis loss (tan $\delta$) in a low temperature region, and thus improves fundamental wet gripping performance of a tire in which the rubber composition is adopted. Note that from a viewpoint of further improving miscibility, the difference between the SP values of the resin component (C) and the isoprene-based rubber (A) is preferably 1.35 $(cal/cm^3)^{1/2}$ or less, more preferably 0.50 $(cal/cm^3)^{1/2}$ or less, even more preferably 0.45 $(cal/cm^3)^{1/2}$ or less, further preferably 0.3 $(cal/cm^3)^{1/2}$ or less, and particularly preferably 0.25 $(cal/cm^3)^{1/2}$ or less.

No specific limitations are placed on the content of the resin component (C) so long as the composition parameter P1 calculated by formula (I-1) and the composition parameter P2 calculated by formula (I-2) are not less than specific values. However, the content of the resin component (C) in the rubber composition is preferably 35 parts by mass or more relative to 100 parts by mass of the rubber component. When the content of the resin component (C) is 35 parts by mass or more relative to 100 parts by mass of the rubber component, wet gripping and particularly wet gripping on porous asphalt paving can be further improved. From the same viewpoint, the content of the resin component (C) relative to 100 parts by mass of the rubber component is more preferably more than 35 parts by mass, more preferably 45 parts by mass or more, more preferably 50 parts by mass or more, more preferably more than 50 parts by mass, more preferably 51 parts by mass or more, even more preferably 53 parts by mass or more, and further preferably 55 parts by mass or more. Moreover, the content of the resin component (C) relative to 100 parts by mass of the rubber component is preferably 70 parts by mass or less. In this case, blooming of the resin component (C) from a tire tends not to occur, and thus effects due to the resin component (C) can be sufficiently displayed, and deterioration of the external appearance of a tire can be inhibited.

The resin component (C) preferably has a softening point of higher than 110°C and a polystyrene-equivalent weight-average molecular weight of 200 g/mol to 1,600 g/mol. By adopting the rubber composition containing this resin component (C) in a tire, it is possible to improve wear resistance performance of the tire.

When the softening point of the resin component (C) is higher than 110°C, a tire in which the rubber composition is adopted can be sufficiently reinforced, and wear resistance performance can be improved. From a viewpoint of wear resistance performance of a tire, the softening point of the resin component (C) is more preferably 116°C or higher, more preferably 120°C or higher, more preferably 123°C or higher, and even more preferably 127°C or higher. Moreover, from a viewpoint of processability, the softening point of the resin component (C) is preferably 160°C or lower, more preferably 150°C or lower, more preferably 145°C or lower, even more preferably 141°C or lower, and further preferably 136°C or lower.

When the polystyrene-equivalent weight-average molecular weight of the resin component (C) is 200 g/mol or more, blooming of the resin component (C) from a tire tends not to occur and effects due to the resin component (C) can be sufficiently displayed, whereas a polystyrene-equivalent weight-average molecular weight of 1,600 g/mol or less facilitates miscibility of the resin component (C) with the rubber component. From a viewpoint of inhibiting blooming of the resin component (C) from a tire and inhibiting deterioration of tire external appearance, the polystyrene-equivalent weight-average molecular weight of the resin component (C) is preferably 500 g/mol or more, more preferably 550 g/mol or more, more preferably 600 g/mol or more, more preferably 650 g/mol or more, and even more preferably 700 g/mol or more. Moreover, from a viewpoint of increasing miscibility of the resin component (C) with the rubber component and enhancing effects due to the resin component (C), the polystyrene-equivalent weight-average molecular weight of the resin component (C) is more preferably 1,570 g/mol or less, more preferably 1,530 g/mol or less, more preferably 1,500 g/mol or less, more preferably 1,470 g/mol or less, more preferably 1,430 g/mol or less, more preferably 1,400 g/mol or less, more preferably 1,370 g/mol or less, more preferably 1,330 g/mol or less, more preferably 1,300 g/mol or less, more preferably 1,200 g/mol or less, more preferably 1,100 g/mol or less, more preferably 1,000 g/mol or less, and even more preferably 950 g/mol or less.

A ratio ($Ts_{HR}/Mw_{HR}$) of the softening point ($Ts_{HR}$) (units: °C) of the resin component (C) relative to the polystyrene-equivalent weight-average molecular weight ($Mw_{HR}$) of the resin component (C) is preferably 0.07 or more, more preferably 0.083 or more, more preferably 0.095 or more, more preferably 0.104 or more, even more preferably 0.14 or more, and further preferably 0.141 or more. Moreover, this ratio ($Ts_{HR}/Mw_{HR}$) is preferably 0.25 or less, more preferably 0.24 or less, even more preferably 0.23 or less, further preferably 0.19 or less, even further preferably 0.18 or less, and particularly preferably 0.17 or less.

Note that the softening point of the resin component (C) is measured in accordance with JIS-K2207-1996 (Ring and Ball Method). Also note that the polystyrene-equivalent weight-average molecular weight of the resin component (C) is measured by gel permeation chromatography (GPC).

The at least partially hydrogenated resin component (C) referred to above means a resin that is obtained through reduction hydrogenation of a resin.

A resin that serves as a raw material of the hydrogenated resin component (C) may be a $C_5$-based resin, a $C_5$-$C_9$-based resin, a $C_9$-based resin, a terpene-based resin, a dicyclopentadiene-based resin, a terpene-aromatic compound-based resin, or the like. One of these resins may be used individually, or two or more of these resins may be used in combination.

The Cs-based resin may be an aliphatic-based petroleum resin resulting from (co)polymerization of a $C_5$ fraction that is obtained through thermal decomposition of naphtha in the petrochemical industry.

The $C_5$ fraction normally contains olefinic hydrocarbons such as 1-pentene, 2-pentene, 2-methyl-1-butene, 2-methyl-2-butene, and 3-methyl-1-butene, and diolefinic hydrocarbons such as 2-methyl-1,3-butadiene, 1,2-pentadiene, 1,3-pentadiene, and 3-methyl-1,2-butadiene. Note that a commercial product can be used as the $C_5$-based resin.

The term "$C_5$-$C_9$-based resin" refers to a $C_5$-$C_9$-based synthetic petroleum resin. The $C_5$-$C_9$-based resin may be a solid polymer resulting from polymerization of a $C_5$-$C_{11}$ fraction derived from petroleum using a Friedel-Crafts catalyst such as $AlCl_3$ or $BF_3$, for example, and may, more specifically, be a copolymer having styrene, vinyltoluene, $\alpha$-methylstyrene, indene, etc. as main components.

The $C_5$-$C_9$-based resin is preferably a resin with little $C_9$ or higher component from a viewpoint of miscibility with the rubber component. The phrase "little $C_9$ or higher component" means that a $C_9$ or higher component constitutes less than 50 mass%, and preferably 40 mass% or less in the total amount of resin. A commercial product can be used as the $C_5$-$C_9$-based resin.

The term "$C_9$-based resin" refers to a $C_9$-based synthetic petroleum resin and refers to a solid polymer resulting from polymerization of a $C_9$ fraction using a Friedel-Crafts catalyst such as $AlCl_3$ or $BF_3$, for example.

The $C_9$-based resin may, for example, be a copolymer having indene, $\alpha$-methylstyrene, vinyltoluene, etc. as main components.

The terpene-based resin is a solid-state resin obtained by using a Friedel-Crafts catalyst to polymerize turpentine, which is obtained simultaneously when obtaining rosin from the pine family of trees, or a polymerization component

separated from turpentine. The terpene-based resin may be a β-pinene resin, an α-pinene resin, or the like. A typical example of the terpene-aromatic compound-based resin is a terpene-phenol resin. The terpene-phenol resin can be obtained by a method in which a terpene and various phenols are reacted using a Friedel-Crafts catalyst, or in which further condensing with formalin is performed. Although no specific limitations are placed on the terpene used as a raw material, monoterpene hydrocarbons such as α-pinene and limonene are preferable, a terpene including α-pinene is more preferable, and α-pinene itself is particularly preferable. Note that styrene or the like may be included in the skeleton.

The term "dicyclopentadiene-based resin" refers to a resin resulting from polymerization of dicyclopentadiene using a Friedel-Crafts catalyst such as $AlCl_3$ or $BF_3$, or the like, for example.

Moreover, the resin serving as a raw material of the hydrogenated resin component (C) may include a resin (Cs-DCPD-based resin) resulting from copolymerization of a $C_5$ fraction and dicyclopentadiene (DCPD).

Note that in a case in which a dicyclopentadiene-derived component constitutes 50 mass% or more in the total amount of resin, the Cs-DCPD-based resin is considered to be encompassed by the "dicyclopentadiene-based resin". In a case in which a dicyclopentadiene-derived component constitutes less than 50 mass% of the total amount of resin, the Cs-DCPD-based resin is considered to be encompassed by the "$C_5$-based resin". The same also applies in a case in which a small amount of a third component or the like is included.

From a viewpoint of increasing miscibility of the rubber component including the isoprene-based rubber (A) and the resin component (C), further improving wet gripping performance of a tire in which the rubber composition is adopted, and reducing rolling resistance, the resin component (C) is preferably one or more selected from the group consisting of a hydrogenated $C_5$-based resin, a hydrogenated $C_5$-$C_9$-based resin, a hydrogenated dicyclopentadiene-based resin (hydrogenated DCPD-based resin), and a hydrogenated terpene-based resin, more preferably one or more selected from the group consisting of a hydrogenated $C_5$-based resin and a hydrogenated $C_5$-$C_9$-based resin, and even more preferably a hydrogenated $C_5$-based resin. Moreover, the resin component (C) is preferably a resin that at least has a hydrogenated DCPD structure or a hydrogenated cyclic structure in a monomer.

The rubber composition for a tire according to the present disclosure may contain a styrene-based thermoplastic elastomer (TPS). The styrene-based thermoplastic elastomer (TPS) includes a styrene-based polymer block (hard segment) and a conjugated diene-based polymer block (soft segment). The styrene-based polymer portion forms physical crosslinks and becomes a bridging point, whereas the conjugated diene-based polymer block imparts rubber elasticity. Double bonds in the conjugated diene-based polymer block (soft segment) may be partially or fully hydrogenated.

It should be noted that the styrene-based thermoplastic elastomer (TPS) is thermoplastic, whereas the rubber component (preferably a diene-based rubber) is not thermoplastic. Therefore, the styrene-based thermoplastic elastomer (TPS) is not encompassed by the "rubber component" in the present specification. The content of the styrene-based thermoplastic elastomer (TPS) is preferably within a range of 1 part by mass to 30 parts by mass relative to 100 parts by mass of the rubber component.

Examples of the styrene-based thermoplastic elastomer (TPS) include a styrene/butadiene/styrene (SBS) block copolymer, a styrene/isoprene/styrene (SIS) block copolymer, a styrene/butadiene/isoprene/styrene (SBIS) block copolymer, a styrene/butadiene (SB) block copolymer, a styrene/isoprene (SI) block copolymer, a styrene/butadiene/isoprene (SBI) block copolymer, a styrene/ethylene/butylene/styrene (SEBS) block copolymer, a styrene/ethylene/propylene/styrene (SEPS) block copolymer, a styrene/ethylene/ethylene/propylene/styrene (SEEPS) block copolymer, a styrene/ethylene/butylene (SEB) block copolymer, a styrene/ethylene/propylene (SEP) block copolymer, and a styrene/ethylene/ethylene/propylene (SEEP) block copolymer.

(Other components)

Besides the rubber component, reinforcing filler (B), resin component (C), and styrene-based thermoplastic elastomer described above, the rubber composition for a tire according to the present disclosure may contain various components that are typically used in the rubber industry as necessary. For example, the rubber composition for a tire according to the present disclosure may contain a silane coupling agent, an age resistor, a wax, a softening agent, a processing aid, stearic acid, zinc oxide (flowers of zinc), a vulcanization accelerator, a vulcanizing agent, or the like that is selected as appropriate to the extent that the object of the present disclosure is not impeded. Commercial products may suitably be used as these compounding agents.

In a case in which the rubber composition for a tire according to the present disclosure contains silica, it is preferable that the rubber composition contains a silane coupling agent in order to improve an effect of the silica. Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropyl

methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxy methyl silylpropyl-N,N-dimethylthiocarbamoyl tetrasulfide, and dimethoxymethylsilylpropylbenzothiazolyl tetrasulfide. Content of the silane coupling agent is preferably within a range of 2 parts by mass to 20 parts by mass, and more preferably within a range of 5 parts by mass to 15 parts by mass relative to 100 parts by mass of silica.

Examples of the age resistor include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the age resistor is not specifically limited but is preferably within a range of 0.1 parts by mass to 5 parts by mass, and more preferably 1 part by mass to 4 parts by mass relative to 100 parts by mass of the rubber component.

Examples of the wax include paraffin wax and microcrystalline wax. The content of the wax is not specifically limited but is preferably within a range of 0.1 parts by mass to 5 parts by mass, and more preferably 1 part by mass to 4 parts by mass relative to 100 parts by mass of the rubber component.

The content of zinc oxide (flowers of zinc) is not specifically limited but is preferably within a range of 0.1 parts by mass to 10 parts by mass, and more preferably 1 part by mass to 8 parts by mass relative to 100 parts by mass of the rubber component.

Examples of the vulcanization accelerator include sulfenamide-based vulcanization accelerators, guanidine-based vulcanization accelerators, thiazole-based vulcanization accelerators, thiuram-based vulcanization accelerators, and dithiocarbamate-based vulcanization accelerators. One of these vulcanization accelerators may be used individually, or two or more of these vulcanization accelerators may be used in combination. The content of the vulcanization accelerator is not specifically limited but is preferably within a range of 0.1 parts by mass to 5 parts by mass, and more preferably within a range of 0.2 parts by mass to 4 parts by mass relative to 100 parts by mass of the rubber component.

Examples of the vulcanizing agent include sulfur. The content of the vulcanizing agent, in terms of sulfur content, is preferable within a range of 0.1 parts by mass to 10 parts by mass, and more preferably within a range of 1 part by mass to 4 parts by mass relative to 100 parts by mass of the rubber component.

(Production method of rubber composition)

No specific limitations are placed on the method by which the rubber composition is produced. For example, the rubber composition can be produced by compounding various components that are appropriately selected as necessary with the previously described rubber component, reinforcing filler (B), and resin component (C) and performing kneading, warming, extrusion, etc. thereof. Moreover, the obtained rubber composition can be vulcanized to obtain vulcanized rubber.

No specific limitations are placed on conditions of the kneading, and various conditions such as the charge volume, rotor speed, ram pressure, and so forth of a kneading device, the kneading temperature, the kneading time, and the type of kneading device can be selected as appropriate depending on the object. The kneading device may be a Banbury mixer, an Intermixer, a kneader, a roll, or the like that is typically used in kneading of rubber compositions.

No specific limitations are placed on conditions of the warming, and various conditions such as the warming temperature, the warming time, and the warming device can be selected as appropriate depending on the object. The warming device may be a warming roll or the like that is typically used in warming of rubber compositions.

No specific limitations are placed on conditions of the extrusion, and various conditions such as the extrusion time, the extrusion rate, the extrusion device, and the extrusion temperature can be selected as appropriate depending on the object. The extrusion device may be an extruder or the like that is typically used in extrusion of rubber compositions. The extrusion temperature can be set as appropriate.

The device, method, conditions, and so forth by which vulcanization is performed are not specifically limited and can be selected as appropriate depending on the object. The device that performs vulcanization may be a machine that performs molding and vulcanization through a mold or the like that is typically used in vulcanization of rubber compositions. A temperature of approximately 100°C to 190°C, for example, may be adopted as a vulcanization condition.

<Tread rubber>

A feature of the tread rubber according to the present disclosure is that it is formed from the rubber composition for a tire set forth above. By adopting the tread rubber according to the present disclosure in a tire, it is possible to provide the tire with excellent wet gripping on dense graded asphalt paving and excellent wet gripping on porous asphalt paving and to increase road surface robustness of the tire as a result of the tread rubber according to the present disclosure being formed from the rubber composition for a tire set forth above.

Note that the tread rubber according to the present disclosure may be adopted in a new tire or may be adopted in a retreaded tire.

<Tire>

A feature of the tire according to the present disclosure is that it includes the tread rubber set forth above. As a result of including the tread rubber set forth above, the tire according to the present disclosure has both excellent wet gripping on dense graded asphalt paving and excellent wet gripping on porous asphalt paving, and also has high road surface robustness.

Depending on the type of tire intended for use, the tire according to the present disclosure may be obtained by first forming a tire using an unvulcanized rubber composition and then vulcanizing the tire, or by first forming a tire using semi-vulcanized rubber yielded by a preliminary vulcanization process or the like and then fully vulcanizing the tire. The tire according to the present disclosure is preferably a pneumatic tire. The pneumatic tire may be filled with ordinary air or air with an adjusted partial pressure of oxygen, or may be filled with an inert gas such as nitrogen, argon, or helium.

EXAMPLES

The following provides an even more detailed description of the present disclosure through Examples. However, the present disclosure is not in any way limited by the following Examples.

<Analysis methods of rubber component>

The glass-transition temperature (Tg) of a rubber component and the bound styrene content of styrene-butadiene rubber were measured by the following methods. Moreover, the SP values (solubility parameters) of natural rubber (isoprene-based rubber (A)) and styrene-butadiene rubber were calculated according to the Fedors method.

(1) Glass-transition temperature (Tg)

A rubber component was taken as a sample and was heated from -100°C at 20°C/min under ventilation with 50 mL/min of helium while recording a DSC curve using a DSC 250 produced by TA Instruments. A peak top (inflection point) of a DSC derivative curve was taken to be the glass-transition temperature.

(2) Bound styrene content

Synthesized styrene-butadiene rubber was taken as a sample, 100 mg of the sample was made up to 100 mL with chloroform, and the sample was dissolved to obtain a measurement sample. The bound styrene content (mass%) relative to 100 mass% of the sample was measured through absorbance at an ultraviolet light absorption wavelength (near 254 nm) due to a phenyl group of styrene. Note that a "UV-2450" spectrophotometer produced by Shimadzu Corporation was used as a measurement apparatus.

<Analysis methods of resin component>

The softening point and weight-average molecular weight of a resin component were measured by the following methods. Moreover, the SP value (solubility parameter) of a resin component was calculated according to the Fedors method.

(3) Softening point

The softening point of a resin component was measured in accordance with JIS-K2207-1996 (Ring and Ball Method).

(4) Weight-average molecular weight

The average molecular weight of a hydrogenated resin was measured by gel permeation chromatography (GPC) under the following conditions, and the polystyrene-equivalent weight-average molecular weight was calculated.

- Column temperature: 40°C
- Injection volume: 50 μL
- Carrier and flow rate: Tetrahydrofuran, 0.6 mL/min
- Sample preparation: Approximately 2.5 mg of resin component dissolved in 10 mL of tetrahydrofuran

<Production of rubber composition>

Rubber compositions of Examples and Comparative Examples were produced by compounding and kneading components according to formulations shown in Table 1.

<Production and evaluation of vulcanized rubber>

Rubber compositions obtained in the Examples and Comparative Examples were each vulcanized to obtain a vulcanized rubber test specimen. The obtained vulcanized rubber test specimen was used to evaluate wet gripping performance by the following method.

(5) Wet gripping performance (dense graded asphalt paving and porous asphalt paving)

A portable friction tester was used to measure the coefficient of friction of the test specimen with respect to each of dense graded asphalt paving and porous asphalt paving. Evaluation results are expressed as index values with the coefficient of friction with respect to dense graded asphalt paving in Comparative Example 1 taken to be 100. Moreover, for each example, the sum of the index value of the coefficient of friction for dense graded asphalt paving and the index value of the coefficient of friction for porous asphalt paving was taken as an overall index value for wet gripping performance. A larger index value indicates a larger coefficient of friction and better wet gripping performance.

[Table 1]

| | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|
| Formulation | Isoprene-based rubber (A) *1 | Parts by mass | 30.0 | 30.0 | 30.0 | 45.0 | 30.0 | 30.0 | 30.0 | 30.0 | 30.0 | 100 | 65.0 |
| | Modified SBR 1 *2 | | 70.0 | 70.0 | 70.0 | 55.0 | 70.0 | 70.0 | 0 | 70.0 | 70.0 | 900 | 35.0 |
| | Modified SBR 2 *3 | | 0 | 0 | 0 | 0 | 0 | 0 | 70.0 | 0 | 0 | 0 | 0 |
| | Reinforcing filler (B) *4 | | 65.0 | 85.0 | 105.0 | 65.0 | 65.0 | 65.0 | 65.0 | 65.0 | 85.0 | 65.0 | 65.0 |
| | Resin component (C) *5 | | 45.0 | 45.0 | 60.0 | 45.0 | 50.0 | 60.0 | 45.0 | 30.0 | 30.0 | 30.0 | 30.0 |
| | Silane coupling agent *6 | | 7.8 | 10.2 | 12.6 | 7.8 | 7.8 | 7.8 | 7.8 | 7.8 | 10.2 | 7.8 | 7.8 |
| | Age resistor *7 | | 2.0 | 2.0 | 2.0 | 2.0 | 2.0 | 2.0 | 2.0 | 2.0 | 2.0 | 2.0 | 2.0 |
| | Wax *8 | | 2.0 | 2.0 | 2.0 | 2.0 | 2.0 | 2.0 | 2.0 | 2.0 | 2.0 | 2.0 | 2.0 |
| | Zinc oxide | | 2.0 | 2.0 | 2.0 | 2.0 | 2.0 | 2.0 | 2.0 | 2.0 | 2.0 | 2.0 | 2.0 |
| | Vulcanization accelerator 1 *9 | | 0.8 | 0.8 | 0.8 | 0.8 | 0.8 | 0.8 | 0.8 | 0.8 | 0.8 | 0.8 | 0.8 |
| | Vulcanization accelerator 2 *10 | | 1.7 | 1.7 | 1.7 | 1.7 | 1.7 | 1.7 | 1.7 | 1.7 | 1.7 | 1.7 | 1.7 |
| | Sulfur | | 1.4 | 1.4 | 1.4 | 1.4 | 1.4 | 1.4 | 1.4 | 1.4 | 1.4 | 1.4 | 1.4 |
| | Total | | 227.7 | 250.1 | 287.5 | 227.7 | 232.7 | 242.7 | 227.7 | 212.7 | 235.1 | 212.7 | 212.7 |
| | (B) Mass fraction | - | 0.285 | 0.340 | 0.365 | 0.285 | 0.279 | 0.268 | 0.285 | 0.306 | 0.362 | 0.306 | 0.306 |
| Composition parameters | P1: (A) parts by mass × (C) parts by mass | - | 1350 | 1350 | 1800 | 2025 | 1500 | 1800 | 1350 | 900 | 900 | 300 | 1950 |
| | P2: ((C) parts by mass/(A) parts by mass) × (B) mass fraction | - | 0.43 | 0.51 | 0.73 | 0.29 | 0.47 | 0.54 | 0.43 | 0.31 | 0.36 | 0.92 | 0.14 |

(continued)

| | | | Examp le 1 | Examp le 2 | Examp le 3 | Examp le 4 | Examp le 5 | Examp le 6 | Examp le 7 | Comparative Example 1 | Comparative Example 2 | Comparative Example 3 | Comparative Example 4 |
|---|---|---|---|---|---|---|---|---|---|---|---|---|---|
| Evaluation | Wet gripping performance (dense graded asphalt paving) | Index value | 105 | 100 | 105 | 92 | 109 | 110 | 91 | 100 | 91 | 91 | 88 |
| | Wet gripping performance (porous asphalt paving) | Index value | 60 | 65 | 74 | 84 | 70 | 73 | 83 | 50 | 56 | 49 | 59 |
| | Wet gripping performance (overall index value) | Index value | 166 | 165 | 179 | 177 | 179 | 184 | 174 | 150 | 147 | 130 | 148 |

**[0167]** *1 Isoprene-based rubber (A): Natural rubber, TSR #20, Tg = -56°C, SP value = 8.20 $(cal/cm^3)^{1/2}$

*2 Modified SBR 1: Hydrocarbyloxysilane compound-modified styrene-butadiene rubber synthesized by method described below, Tg = -65°C, SP value = 8.65 $(cal/cm^3)^{1/2}$

*3 Modified SBR 2: Modified styrene-butadiene rubber obtained by using N-(1,3-dimethylbutylidene)-3-triethoxysilyl-1-propanamine to modify terminal of styrene-butadiene rubber obtained with butyllithium as initiator; bound styrene content = 35 mass%, Tg = -38°C, SP value = 8.95 $(cal/cm^3)^{1/2}$

*4 Reinforcing filler (B): Silica, Nipsil AQ (product name) produced by Tosoh Silica Corporation

*5 Resin component (C): Hydrogenated $C_5$-based resin, Impera® (Impera is a registered trademark in Japan, other countries, or both) E1780 (product name) produced by Eastman Chemical Company, softening point = 130°C, weight-average molecular weight (Mw) = 909 g/mol, SP value = 8.35 $(cal/cm^3)^{1/2}$

*6 Silane coupling agent: Si75 (product name) produced by Evonik Degussa Corporation

*7 Age resistor: NOCRAC 6C (product name) produced by Ouchi Shinko Chemical Industrial Co., Ltd.

*8 Wax: OZOACE 0701 (product name) produced by Nippon Seiro Co., Ltd.

*9 Vulcanization accelerator 1: NOCCELER DM-P (product name) produced by Ouchi Shinko Chemical Industrial Co., Ltd.

*10 Vulcanization accelerator 2: SANCELER NS-G (product name) produced by Sanshin Chemical Industry Co., Ltd.

<Synthesis method of modified SBR 1 (*2)>

An 800 mL pressure-resistant glass vessel that had been dried and purged with nitrogen was charged with a cyclohexane solution of 1,3-butadiene and a cyclohexane solution of styrene such that 67.5 g of 1,3-butadiene and 7.5 g of styrene were charged, and was also charged with 0.09 mmol of 2,2-ditetrahydrofurylpropane, and then 0.7 mmol of n-butyllithium. Thereafter, 1.5 hours of polymerization was performed at 50°C. Once the polymerization conversion rate in this polymerization had reached almost 100%, 0.63 mmol of N,N-bis(trimethylsilyl)-3-[diethoxy(methyl)silyl]propylamine as a modifying agent was added into the polymerization reaction system, and a modification reaction was performed at 50°C for 30 minutes. Thereafter, 2 mL of a 5 mass% isopropanol solution of 2,6-di-t-butyl-p-cresol (BHT) was added to stop the reaction, and then drying was performed by a standard method to yield modified SBR 1.

As a result of measurement of the microstructure of the modified SBR 1 that was obtained, the bound styrene content was determined to be 10 mass%. Moreover, the glass-transition temperature (Tg) of the modified SBR 1 was -65°C.

It can be seen from Table 1 that the rubber compositions of the Examples in accordance with the present disclosure have both excellent wet gripping on dense graded asphalt paving and excellent wet gripping on porous asphalt paving and can also increase road surface robustness of a tire.

In contrast, it can be seen that the rubber compositions of the Comparative Examples have poor wet gripping performance as a result of at least not simultaneously satisfying the composition parameter (P1 and P2) requirements.

INDUSTRIAL APPLICABILITY

According to the present disclosure, it is possible to provide a rubber composition for a tire, and also tread rubber obtained from this rubber composition, with which it is possible to obtain a tire that has both excellent wet gripping on dense graded asphalt paving and excellent wet gripping on porous asphalt paving, and that also has high road surface robustness.

Moreover, according to the present disclosure, it is possible to provide a tire that has both excellent wet gripping on dense graded asphalt paving and excellent wet gripping on porous asphalt paving, and that also has high road surface robustness.

## Claims

1. A rubber composition for a tire comprising: a rubber component including an isoprene-based rubber (A) having a glass-transition temperature of -50°C or lower; a reinforcing filler (B); and a resin component (C), wherein

   a proportion constituted by the isoprene-based rubber (A) in 100 parts by mass of the rubber component is not less than 15 parts by mass and less than 50 parts by mass,
   the resin component (C) is at least partially hydrogenated and has an SP value difference with the isoprene-based rubber (A) of 1.40 $(cal/cm^3)^{1/2}$ or less, and
   when a diene-based rubber component is taken to be 100 parts by mass, a composition parameter P1 calculated by formula (I-1), shown below:

   composition parameter P1 = (number of parts by mass of isoprene- based rubber (A)) $\times$ (number of parts by mass of resin component (C)) (I-1)

   is 1,000 or more, and a composition parameter P2 calculated by formula (I-2), shown below:

   composition parameter P2 = {(number of parts by mass of resin component (C))/(number of parts by mass of isoprene-based rubber (A))} $\times$ (mass fraction of reinforcing filler (B) in rubber composition) (I-2)

   is 0.25 or more.

2. The rubber composition for a tire according to claim 1, wherein the SP value difference between the resin component (C) and the isoprene-based rubber (A) is 0.50 $(cal/cm^3)^{1/2}$ or less.

3. The rubber composition for a tire according to claim 1 or 2, wherein the reinforcing filler (B) includes silica.

4. The rubber composition for a tire according to any one of claims 1 to 3, wherein the resin component (C) has a softening point of higher than 110°C and a polystyrene-equivalent weight-average molecular weight of 200 g/mol to 1,600 g/mol.

5. The rubber composition for a tire according to any one of claims 1 to 4, wherein content of the resin component (C) is 35 parts by mass or more relative to 100 parts by mass of the rubber component.

6. Tread rubber formed from the rubber composition for a tire according to any one of claims 1 to 5.

7. A tire comprising the tread rubber according to claim 6.

## INTERNATIONAL SEARCH REPORT

International application No.
**PCT/JP2022/026638**

**A. CLASSIFICATION OF SUBJECT MATTER**

***C08L 9/00***(2006.01)i; ***B60C 1/00***(2006.01)i; ***C08K 3/013***(2018.01)i; ***C08L 101/00***(2006.01)i
FI: C08L9/00; C08K3/013; C08L101/00; B60C1/00 A

According to International Patent Classification (IPC) or to both national classification and IPC

**B. FIELDS SEARCHED**

Minimum documentation searched (classification system followed by classification symbols)

C08L9/00; B60C1/00; C08K3/013; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/125242 A1 (BRIDGESTONE CORP.) 24 June 2021 (2021-06-24)<br>entire text | 1-7 |
| A | JP 2007-177209 A (SUMITOMO RUBBER INDUSTRIES, LTD.) 12 July 2007 (2007-07-12)<br>entire text | 1-7 |
| A | WO 2016/104144 A1 (SUMITOMO RUBBER INDUSTRIES, LTD.) 30 June 2016 (2016-06-30)<br>entire text | 1-7 |
| A | JP 2017-214493 A (KURARAY CO., LTD.) 07 December 2017 (2017-12-07)<br>entire text | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 September 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/026638**

| Patent document cited in search report | Publication date (day/month/year) | Patent family member(s) | Publication date (day/month/year) |
|---|---|---|---|
| WO 2021/125242 A1 | 24 June 2021 | (Family: none) | |
| JP 2007-177209 A | 12 July 2007 | US 2007/0123636 A1<br>entire text<br>EP 1790688 A1<br>CN 1974646 A | |
| WO 2016/104144 A1 | 30 June 2016 | US 2017/0341468 A1<br>entire text<br>EP 3228658 A1<br>CN 107001712 A | |
| JP 2017-214493 A | 07 December 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015079703 A1
- WO 2003046020 A1
- JP 2007217562 A


### Non-patent literature cited in the description


- **R.R. HAMPTON.** *Analytical Chemistry,* 1949, vol. 21, 923